(19) **Europäisches Patentamt European Patent Office Office européen des brevets**

(11) **EP 3 443 700 B1**

(12) **EUROPEAN PATENT SPECIFICATION**

(45) Date of publication and mention of the grant of the patent:
**22.12.2021 Bulletin 2021/51**

(51) Int Cl.:
***H04L 5/00*** (2006.01)

(21) Application number: **17719463.6**

(86) International application number:
**PCT/US2017/027206**

(22) Date of filing: **12.04.2017**

(87) International publication number:
**WO 2017/180742 (19.10.2017 Gazette 2017/42)**

(54) **UPLINK DEMODULATION REFERENCE SIGNAL ENHANCEMENT IN FULL-DIMENSION MULTIPLE-INPUT MULTIPLE-OUTPUT SYSTEMS**

VERBESSERUNG EINES UPLINK-DEMODULATIONSREFERENZSIGNALS IN FULL-DIMENSION-MIMO-SYSTEMEN

AMÉLIORATION DU SIGNAL DE RÉFÉRENCE DE DÉMODULATION DE LIAISON MONTANTE DANS DES SYSTÈMES À ENTRÉES MULTIPLES ET SORTIES MULTIPLES DE PLEINE DIMENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2016 US 201662321424 P**
**09.09.2016 PCT/CN2016/098595**

(43) Date of publication of application:
**20.02.2019 Bulletin 2019/08**

(73) Proprietor: **Apple Inc.**
**Cupertino, CA 95014 (US)**

(72) Inventors:
• **ZHANG, Yushu**
**Beijing 100190 (CN)**
• **ZHU, Yuan**
**Beijing 100012 (CN)**
• **NIU, Huaning**
**San Jose, California 95120 (US)**
• **XIONG, Gang**
**Beaverton, Oregon 97006 (US)**
• **CHANG, Wenting**
**Beijing 100190 (CN)**

(74) Representative: **Barnfather, Karl Jon**
**Withers & Rogers LLP**
**2 London Bridge**
**London SE1 9RA (GB)**

(56) References cited:
**US-A1- 2014 126 480      US-A1- 2014 192 756**
**US-A1- 2014 241 303**

• **INTEL COOPERATION: "Uplink DM-RS enhancements for FD-MIMO", 3GPP DRAFT; R1-162369 UL DMRS ENHANCEMENT FOR FD-MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080148, Retrieved from the Internet: URL:http://www.3gpp.org/ftp/tsg_ran/WG1_RL 1/TSGR1_84b/Docs/ [retrieved on 2016-04-02]**
• **HUAWEI ET AL: "Uplink DMRS enhancement to support more orthogonal partial overlapped ports", 3GPP DRAFT; R1-162601, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080289, Retrieved from the Internet: URL:http://www.3gpp.org/ftp/tsg_ran/WG1_RL 1/TSGR1_84b/Docs/ [retrieved on 2016-04-02]**

## Description

### BACKGROUND

A variety of wireless cellular communication systems have been implemented, including a 3rd Generation Partnership Project (3 GPP) Universal Mobile Telecommunications System, a 3GPP Long-Term Evolution (LTE) system, and a 3GPP LTE- Advanced (LTE-A) system. Next-generation wireless cellular communication systems based upon LTE and LTE-A systems are being developed, such as a fifth generation (5G) wireless system / 5G mobile networks system.

Various wireless cellular communication systems may incorporate Demodulation Reference Signals (DMRS) to enhance performance.

US 2014/0192756 relates to a technique for generating a reference signal for use in a communication system in which for reference signal generation multiple base sequences are defined is presented. A method implementation of the technique comprises generating a first reference signal sequence from a first base sequence and a second reference signal sequence from a second base sequence. A reference signal is generated that comprises the first reference signal sequence and the second reference signal sequence. The first reference signal sequence occupies a first spectral fragment of the reference signal, and the second reference signal sequence occupies a second spectral fragment of the reference signal. The second spectral fragment and the first spectral fragment do not overlap.

US 2014/0241303 relates to a transceiving point, a method for setting a reference signal of a transceiving point, a terminal, a method in which a terminal transmits a reference signal an a wireless communication system in which a terminal transmits an uplink reference signal.

US 2014/0126480 relates to a channel estimation system jointly estimates the channels for users transmitting signals allocated overlapping frequency resources in a received composite wideband signal. The channel estimation system may further limit the joint channel estimation process to only locally scheduled UEs and those desired users transmitting detectable desired signals using frequency resources at least partially overlapping the locally scheduled UE's frequency resources. More particularly, a local base station processes the received composite wideband signal to determine which of the potential desired user(s) have transmitted user signals allocated frequency resources that at least partially overlap the frequency resources allocated to locally scheduled users and having a sufficient signal strength and quality to be detectable as present in the received signal. The local base station processes the local and detected desired user signals in the received signal to jointly calculate channel estimates for the corresponding users based on the corresponding reference sequences.

### SUMMARY

The present invention provides an apparatus of a User Equipment, an apparatus of an Evolved Node B and machine readable storage media as set out in the appended independent claims.

### BRIEF DESCRIPTION OF THE DRAWINGS

The embodiments of the disclosure will be understood more fully from the detailed description given below and from the accompanying drawings of various embodiments of the disclosure. However, while the drawings are to aid in explanation and understanding, they are only an aid, and should not be taken to limit the disclosure to the specific embodiments depicted therein.

Fig. 1 illustrates a scenario of Resource Block (RB) assignment, in accordance with some embodiments of the disclosure.

Fig. 2 illustrates a scenario of RB assignment comprising an overlapping RB indicator, in accordance with some embodiments of the disclosure.

Fig. 3 illustrates a scenario of RB assignment comprising two assignments, in accordance with some embodiments of the disclosure.

Fig. 4 illustrates an RB structure for Interleaved Frequency Division Multiplex Access (IFDMA) based Demodulation Reference Signal (DMRS) for a Repetition Factor (RPF) of two, in accordance with some embodiments of the disclosure.

Fig. 5 illustrates an RB structure for IFDMA based DMRS for an RPF of two with frequency hopping, in accordance with some embodiments of the disclosure.

Fig. 6 illustrates RB structures for IFDMA based DMRS for an RPF of four with frequency hopping, in accordance with some embodiments of the disclosure.

Fig. 7 illustrates an Evolved Node B (eNB) and a User Equipment (UE), in accordance with some embodiments of the disclosure.

Fig. 8 illustrates hardware processing circuitries for a UE for control signaling of Uplink (UL) DMRS enhancement in Full-Dimension Multiple-Input Multiple-Output (FD- MIMO) systems, in accordance with some embodiments of the disclosure.

Fig. 9 illustrates hardware processing circuitries for a UE for UL IFDMA based DMRS in enhanced FD-MIMO systems, in accordance with some embodiments of the disclosure.

Fig. 10 illustrates hardware processing circuitries for an eNB for control signaling of UL DMRS enhancement in FD-MIMO systems, in accordance with some embodiments of the disclosure.

Fig. 11 illustrates hardware processing circuitries for an eNB for UL IFDMA based DMRS in enhanced FD-MIMO systems, in accordance with some embodiments of the disclosure.

Fig. 12 illustrates methods for a UE for control signaling of UL DMRS enhancement in FD-MIMO systems, in accordance with some embodiments of the disclosure.

Fig. 13 illustrates methods for a UE for UL IFDMA based DMRS in enhanced FD-MIMO systems, in accordance with some embodiments of the disclosure.

Fig. 14 illustrates methods for an eNB for control signaling of UL DMRS enhancement in FD-MIMO systems, in accordance with some embodiments of the disclosure.

Fig. 15 illustrates methods for an eNB for UL IFDMA based DMRS in enhanced FD-MIMO systems, in accordance with some embodiments of the disclosure.

Fig. 16 illustrates example components of a UE device, in accordance with some embodiments of the disclosure.

## DETAILED DESCRIPTION

Various wireless cellular communication systems have been implemented or are being proposed, including a 3rd Generation Partnership Project (3GPP) Universal Mobile Telecommunications System (UMTS), a 3GPP Long-Term Evolution (LTE) system, a 3GPP LTE-Advanced system, and a 5th Generation wireless system / 5th Generation mobile networks (5G) system / 5th Generation new radio (NR) system.

In some systems, enhancement may be made to Uplink (UL) reference signals(e.g., Demodulation Reference Signal (DMRS)), which may advantageously facilitate support orthogonal DMRS for Multi-User Multiple-Input Multiple-Output (MU-MIMO) operation with partially overlapping bandwidth allocations. A DMRS sequence enhancement to generate orthogonal DMRS in partially overlapping allocated bandwidths (BWs) may incorporate two DMRS sequences: one for overlapping BWs and another for the remaining BWs. In the overlapping RBs, DMRS from different UEs may be orthogonal, and may have with different cyclic shifts or Orthogonal Cover Codes (OCCs).

Discussed herein are various mechanisms and methods for control signaling ofUL DMRS enhancement in FD-MIMO systems, which may support split DMRS transmission and orthogonal DMRS in partially overlapping BW allocations. The control signaling may indicate to one or more User Equipments (UEs) which Resource Blocks (RBs) are overlapping RBs, and which RBs are non-overlapping RBs.

Meanwhile, in some systems, orthogonal DMRS for MU-MIMO may be supported with partially-overlapping BW allocations by Interleaved Frequency Division Multiplex Access (IFDMA) with a Repetition Factor (RPF) of two or more (and in some systems, with an RPF of four or more). Accordingly, IFDMA with an RPF equal to 2 may be supported for UL DMRS enhancement. In some embodiments, different combs of DMRS within an RB (e.g., DMRS-bearing Resource Elements (REs) substantially evenly spaced among subcarrier frequencies within an Orthogonal Frequency Division Multiplexing (OFDM) symbol of an RB) may be allocated to different UEs. This may in turn support more orthogonal DMRS sequences for UEs with partially-overlapping bandwidth allocations.

Also discussed herein are various mechanisms and methods for UL IFDMA based DMRS in enhanced FD-MIMO systems. The UL IFDMA based DMRS may comprise various resource mapping schemes and control signaling to support RPFs of two, RPFs of four, and legacy LTE DMRS (e.g., 3 GPP Release 10).

In the following description, numerous details are discussed to provide a more thorough explanation of embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct electrical, mechanical, or magnetic connection between the things that are connected, without any intermediary devices. The term "coupled" means either a direct electrical, mechanical, or magnetic connection between the things that are connected or an indirect connection through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The terms "substantially," "close," "approximately," "near," and "about" generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking, or in any other manner.

It is to be understood that the terms so used are interchangeable under appropriate circumstances such that the embodiments of the invention described herein are, for example, capable of operation in other orientations than those illustrated or otherwise described herein.

The terms "left," "right," "front," "back," "top," "bottom," "over," "under," and the like in the description and in the claims, if any, are used for descriptive purposes and not necessarily for describing permanent relative positions.

For purposes of the embodiments, the transistors in various circuits, modules, and logic blocks are Tunneling FETs (TFETs). Some transistors of various embodiments may comprise metal oxide semiconductor (MOS) transistors, which include drain, source, gate, and bulk terminals. The transistors may also include Tri-Gate and FinFET transistors, Gate All Around Cylindrical Transistors, Square Wire, or Rectangular Ribbon Transistors or other devices implementing transistor functionality like carbon nanotubes or spintronic devices. MOSFET symmetrical source and drain terminals i.e., are identical terminals and are interchangeably used here. A TFET device, on the other hand, has asymmetric Source and Drain terminals. Those skilled in the art will appreciate that other transistors, for example, Bi-polar junction transistors-BJT PNP/NPN, BiCMOS, CMOS, etc., may be used for some transistors without departing from the scope of the disclosure.

For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

In addition, for purposes of the present disclosure, the term "eNB" may refer to a legacy LTE capable Evolved Node-B (eNB), a next-generation or 5G eNB, an mmWave eNB, an mmWave small cell, an AP, and/or another base station for a wireless communication system. For purposes of the present disclosure, the term "UE" may refer to a legacy LTE capable UE, a 5G UE, an mmWave UE, an STA, and/or another mobile equipment for a wireless communication system.

Various embodiments of eNBs and/or UEs discussed below may process one or more transmissions of various types. Some processing of a transmission may comprise demodulating, decoding, detecting, parsing, and/or otherwise handling a transmission that has been received. In some embodiments, an eNB or UE processing a transmission may determine or recognize the transmission's type and/or a condition associated with the transmission. For some embodiments, an eNB or UE processing a transmission may act in accordance with the transmission's type, and/or may act conditionally based upon the transmission's type. An eNB or UE processing a transmission may also recognize one or more values or fields of data carried by the transmission. Processing a transmission may comprise moving the transmission through one or more layers of a protocol stack (which may be implemented in, e.g., hardware and/or software-configured elements), such as by moving a transmission that has been received by an eNB or a UE through one or more layers of a protocol stack.

Various embodiments of eNBs and/or UEs discussed below may also generate one or more transmissions of various types. Some generating of a transmission may comprise modulating, encoding, formatting, assembling, and/or otherwise handling a transmission that is to be transmitted. In some embodiments, an eNB or UE generating a transmission may establish the transmission's type and/or a condition associated with the transmission. For some embodiments, an eNB or UE generating a transmission may act in accordance with the transmission's type, and/or may act conditionally based upon the transmission's type. An eNB or UE generating a transmission may also determine one or more values or fields of data carried by the transmission. Generating a transmission may comprise moving the transmission through one or more layers of a protocol stack (which may be implemented in, e.g., hardware and/or software-configured elements), such as by moving a transmission to be sent by an eNB or a UE through one or more layers of a protocol stack.

In various embodiments, resources may span various RBs, Physical Resource Blocks (PRBs), and/or time periods (e.g., frames, subframes, and/or slots) of a wireless communication system. In some contexts, allocated resources (e.g., channels, Orthogonal Frequency-Division Multiplexing (OFMD) symbols, subcarrier frequencies, REs, and/or portions thereof) may be formatted for (and prior to) transmission over a wireless communication link. In other contexts, allocated resources (e.g., channels, OFDM symbols, subcarrier frequencies, REs, and/or portions thereof) may be detected from (and subsequent to) reception over a wireless communication link.

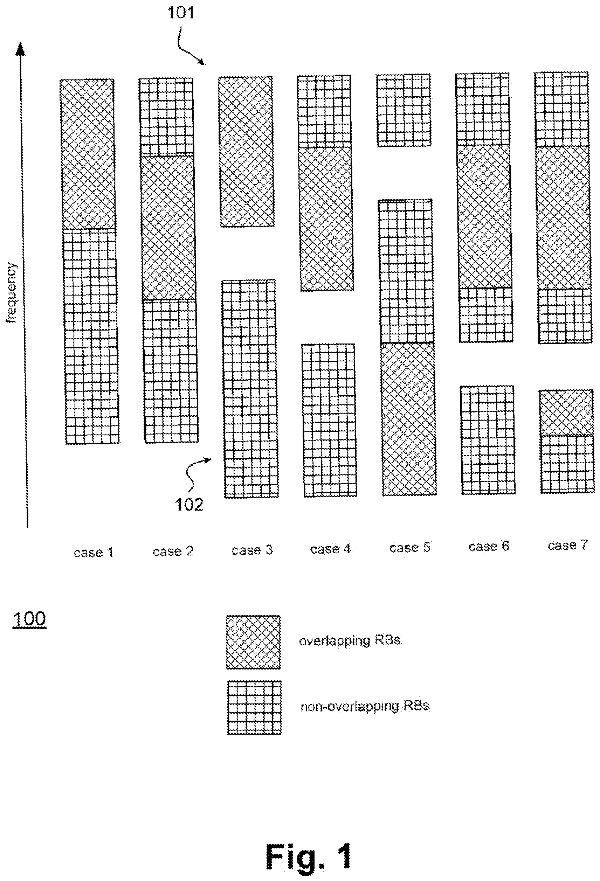

Fig. 1 illustrates a scenario of Resource Block (RB) assignment, in accordance with some embodiments of the disclosure. Scenario 100 comprises a plurality of cases of RB assignment across a frequency spectrum (e.g., a case 1 through a case 7). Each case may have one or more ranges of overlapping RBs 101 and one or more ranges of non-overlapping RBs 102.

In case 1 , a range of lower frequencies may have non-overlapping RBs 102 and a range of higher frequencies may have overlapping RBs 101. In case 2, a range of lower frequencies may have non-overlapping RBs 102, a range of middle frequencies may have overlapping RBs 101, and a range of higher frequencies may have non-overlapping RBs 102. In case 3, a range of lower frequencies may have non-overlapping RBs 102, a range of middle frequencies may have no assigned RBs, and a range of higher frequencies may have overlapping RBs 101. In case 4, a range of lower frequencies may have non-overlapping RBs 102, a first range of middle frequencies may have no assigned RBs, a second range of middle frequencies may have overlapping RBs 101, and a range of higher frequencies may have non-overlapping RBs 102.

In case 5, a range of lower frequencies may have overlapping RBs 101, a first range of middle frequencies may have non-overlapping RBs 102, a second range of middle frequencies may have no assigned RBs, and a range of higher frequencies may have non- overlapping RBs 102. In case 6, a range of lower frequencies may have non-overlapping RBs 102, a first range of middle frequencies may have no assigned RBs, a second range of middle frequencies may have non-overlapping RBs 102, a third range of middle frequencies may have overlapping RBs 101, and a range of higher frequencies may have non-overlapping RBs 102. In case 7, a range of lower frequencies may have non-overlapping RBs 102, a first range of middle frequencies may have overlapping RBs 101, a second range of middle frequencies may have no assigned RBs, a third range of middle frequencies may have non- overlapping RBs 102, a fourth range of middle frequencies may have overlapping RBs 101, and a range of higher frequencies may have non-overlapping RBs 102.

For case 1 and case 2, overlapping RBs 101 and non-overlapping RBs 102 may be consecutive. For case 3 through case 7, there may be two sets of allocated RBs, and each set may contain ranges of overlapping RBs 101, ranges of non-overlapping RBs 102, or consecutive ranges of overlapping RBs 101 and/or non-overlapping RBs 102. In various embodiments, different DMRS sequences are mapped to different types of RBs (e.g., overlapping RBs and non-overlapping RBs) to create orthogonal DMRS.

In various embodiments, resource allocation type 0 and resource allocation type 1 may be supported for Physical Uplink Shared Channel (PUSCH) transmission. In resource allocation type 0, a set of consecutive RBs may be allocated. In resource allocation type 1, two sets of RBs may be allocated, and each set may contain consecutive RBs.

In resource allocation type 0, a Resource Indication Value (RIV) corresponding with a starting RB index $RB_{start}$ and a length of RBs $L_{CRBs}$ may be obtained in accordance with the equation below:

$$RIV = \begin{cases} N_{RB}^{UL}(L_{CRBs} - 1) + RB_{start}, & if \ (L_{CRBs} - 1) \leq \lfloor N_{RB}^{UL}/2 \rfloor \\ N_{RB}^{UL}(N_{RB}^{UL} - L_{CRBs} + 1) + (N_{RB}^{UL} - 1 - RB_{start}), otherwise \end{cases}$$

Where $N_{RB}^{UL}$ may denote a number of RBs in an Uplink.

In resource allocation type 1, a combinatorial index $r$ may be used to indicate a Resource Block Group (RBG) index for the two set of RBs, which may be obtained by:

$$r = \sum_{i=0}^{M-1} \binom{N - s_i}{M - i}$$

Where $M = 4$; $N = \lceil N_{RB}^{UL}/P \rceil + 1$ ($P$ may be an RBG size); and $s_i$ may indicate an RBG index. The first set of RBs may comprise RBGs from $s_0$ to $s_1$ - 1. The second set of RBs may comprise RBGs from $s_2$ to $s_3$ - 1.

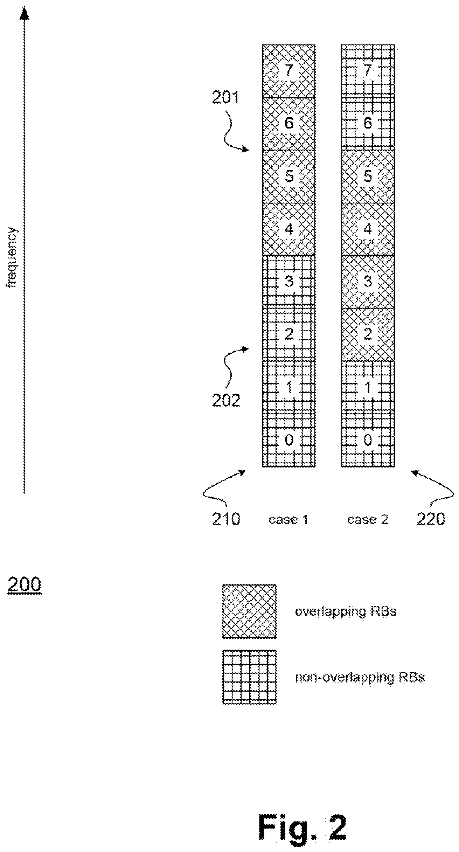

Fig. 2 illustrates a scenario of RB assignment comprising an overlapping RB indicator, in accordance with some embodiments of the disclosure. Scenario 200 may comprise a first case 210 and a second case 220. Each case may have one or more ranges of overlapping RBs 201 and one or more ranges of non-overlapping RBs 202.

To generate two DMRS sequences for overlapping RBs and non-overlapping RBs, a UE may distinguish the overlapping RBs and the non-overlapping RBs. In some embodiments, an eNB may then indicate to the UE which RBs are overlapping RBs, and the remaining RBs may then be determined to be non-overlapping RBs. Such an indication may be given by UL grant, which may advantageously support flexible scheduling.

For first case 210 and second case 220, a UE may be allocated one set of consecutive RBs, which may be similar to a resource allocation type 0. To reduce the overhead of RB assignment indicator in uplink grant, the uplink RBs may be divided into several RBGs, which is similar to resource allocation type 1.

In some examples, in support of case 1, case 2, and case 3, a bit width for an RB assignment may be the same as for resource allocation type 1, and may be $\left\lceil \log_2\left( \binom{\lceil N_{RB}^{UL}/P \rceil + 1}{4} \right) \right\rceil$. An indicator for overlapping RBs may be added to a UL grant.

A first value of the added indicator may indicate that the overlapping RBs are RBGs from $s_0$ to $s_1$ - 1, and that the remaining RBs are RBGs from $s_1$ to $s_2$ - 1 (which may indicate, for example, first case 210), and the first $\left\lceil \log_2\left( \binom{\lceil N_{RB}^{UL}/P \rceil + 1}{3} \right) \right\rceil$ bits for RB assignments may be valid. A second value of the added indicator may indicate that the overlapping RBs are RBGs from $s_1$ to $s_2$ - 1, and that the remaining RBs are RBGs from $s_0$ to $s_3$ - 1 excluding the RBG s from $s_1$ to $s_2$ - 1 (which may indicate, for example, second case 220). A third value of the added indicator may indicate that there are no overlapping RBs, and that resource allocation type 0 may be used in RB assignment.

For some examples, there may be a 1-bit overlapping RB indicator, in which P may be 2. For some embodiments (for example, with respect to first case 210), the relationships $s_0 = 0$, $s_1 = 2$, $s_2 = 4$ may hold, $s_3$ might not be used, and the indicator may have a first value (e.g. a value of 0). For some examples (for example, with respect to second case 220), the relationships $s_0 = 0$, $s_1 = 1$, $s_2 = 3$, $s_3 = 4$ may hold, and the indicator may have a second value (e.g., a value of 1).

An eNB configures a set of potential overlapping RBs by Radio Resource Control (RRC) signaling. An indicator is added to a UL grant to indicate which optional overlapping RBs may be considered as real overlapping RBs. One value of this indicator is defined to denote that there are no overlapping RBs.

For example, for a set of 3 RB segments defined as: $\{[0, \lceil N_{RB}^{UL}/4 \rceil - 1]$; $[\lceil N_{RB}^{UL}/4 \rceil - 1, 2\lceil N_{RB}^{UL}/4 \rceil - 1]; [2\lceil N_{RB}^{UL}/4 \rceil - 1, 3\lceil N_{RB}^{UL}/4 \rceil - 1]\}$, a two-bit indicator is added in a UL grant. For the two-bit indicator, a first value (e.g., a value of 0) denotes that there are no overlapping RBs, and a second value x (e.g., where x is not equal to 0) denotes that an RB segment x in the set of RB segments comprises overlapping RBs.

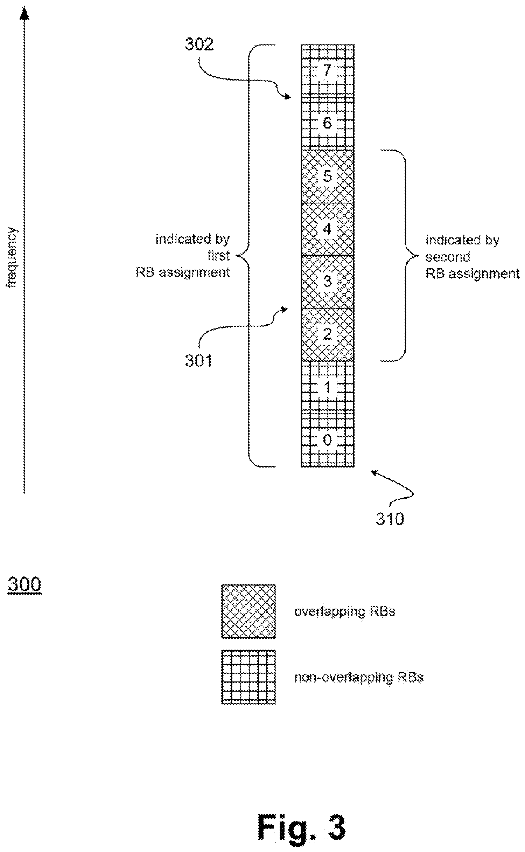

Fig. 3 illustrates a scenario of RB assignment comprising two assignments, in accordance with some embodiments of the disclosure. Scenario 300 may comprise a case 310 having one or more ranges of overlapping RBs 301 and one or more ranges of non-overlapping RBs 302.

In some embodiments, to support various cases (e.g., the cases of Fig. 1, from case 1 to case 7), a second RB assignment indicator for overlapping RBs may be added in a UL grant. The resource allocation type for this second RB assignment may be type 0 or type 1, and may be determined by an RB allocation for the overlapping RBs. RBs in the first RB assignment excluding RBs in the second RB assignment may then be non-overlapping RBs.

A resource allocation type between a first RB assignment and a second RB assignment can be different. In general, in the UL grant, the following indicators may be added. Note that this method may be also used for a continuous resource allocation case.

In some embodiments, full RBs may be indicated by the first RB assignment. A starting RB index may be a first value (e.g., a value of 0) and a length of RBs may be a second value (e.g., a value of 8). Overlapping RBs may be indicated by a second RB assignment, where a starting RB index for the overlapping RBs may be a first value (e.g., a value of 0), and a length of overlapping RBs may be a second value (e.g., a value of 4). The remaining RBs {0, 1, 6, 7} may be non-overlapping RBs.

For various embodiments, in order to support more than two split DMRS, more than two overlapping RBs (and/or ranges of RBs) may be indicated. In some embodiments, potential overlapping RBs may be configured by RRC signaling. A bit-map may be added to a UL grant, in which each bit may indicate whether a respectively corresponding potential overlapping RB uses an independent DMRS sequence. For example, if a first bit has a first value (e.g., a value of 1), the first RBs defined in the potential overlapping RBs set should be overlapping RBs, for which an independent DMRS sequence may be used.

In some embodiments, more than one additional RB assignment may be defined in the UL grant. Each additional RB assignment may indicate RBs with an independent DMRS sequence.

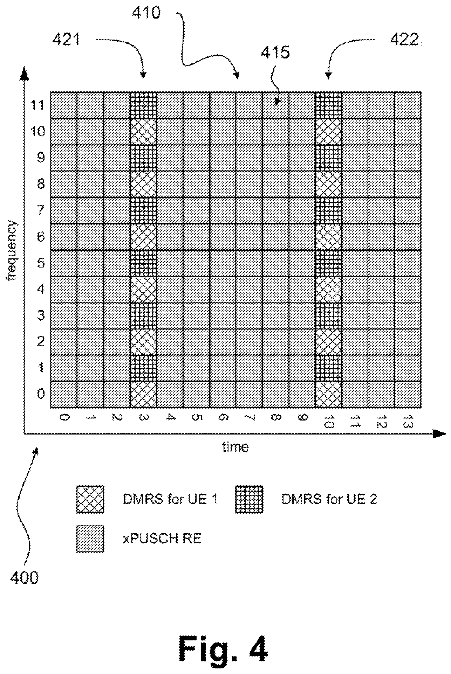

Fig. 4 illustrates an RB structure for IFDMA based DMRS for an RPF of two, in accordance with some embodiments of the disclosure. An RB structure 400 may comprise an RB 410 with REs 415 distributed across a plurality of OFDM symbols in time (e.g., OFDM symbols from 0 through 13) and across a plurality of subcarrier frequencies (e.g., subcarrier frequencies from 0 through 11). RB structure 400 may correspond to an implementation of IFDMA with an RPF of two.

DMRS may be carried in a first OFDM symbol 421 (e.g., OFDM symbol 3) and a second OFDM symbol 422 (e.g., OFDM symbol 10). In first OFDM symbol 421, DMRS for a first UE may have a first comb configuration (e.g., DMRS-bearing REs substantially evenly spaced among subcarrier frequencies within an OFDM symbol of an RB), and DMRS for a second UE may have a second comb configuration. For first OFDM symbol 421, the first configuration may span every second subcarrier frequency, beginning with subcarrier frequency 0. The second configuration may span every second subcarrier frequency, beginning with subcarrier frequency 1.

In second OFDM symbol 422, DMRS for the first UE may have a third comb configuration, and DMRS for the second UE may have a fourth configuration. For second OFDM symbol 422, the third configuration may span every second subcarrier frequency, beginning with subcarrier frequency 0. The fourth configuration may span every second subcarrier frequency, beginning with subcarrier frequency 1.

In some embodiments, the first UE may be allocated with a comb offset having a first value (e.g., a value of 0), and the second UE may be allocated with a comb offset having a second value (e.g., a value of 1). Accordingly, for such embodiments, the first UE and the second UE may be distinguished by different comb offsets.

For some embodiments, on a receiver side, an eNB may be disposed to estimating DMRS in even subcarriers first, or in odd subcarriers first, and then do frequency domain channel estimation to obtain the channel (e.g., determine channel state and/or parameters) for all subcarriers, which may in turn increase receiver complexity. For example, channel interpolation done on the basis of a Wiener filter may be disposed to using a 6x6 matrix inverse. As a result, enhancement to reduce channel complexity may be helpful.

Moreover, for IFDMA, the allocation of DMRS in the same subcarrier frequencies across different OFDM symbols may result in degraded channel estimation performance. In contrast, the allocation of DMRS in different subcarrier frequencies across different OFDM symbols may advantageously improve channel estimation performance.

In addition, providing support for an RPF of two, an RPF of four, and a legacy LTE DMRS (e.g., as a fallback mechanism) may involve design of control signaling. In various embodiments, a UE may be disposed to determining which type of DMRS and which comb offset to use.

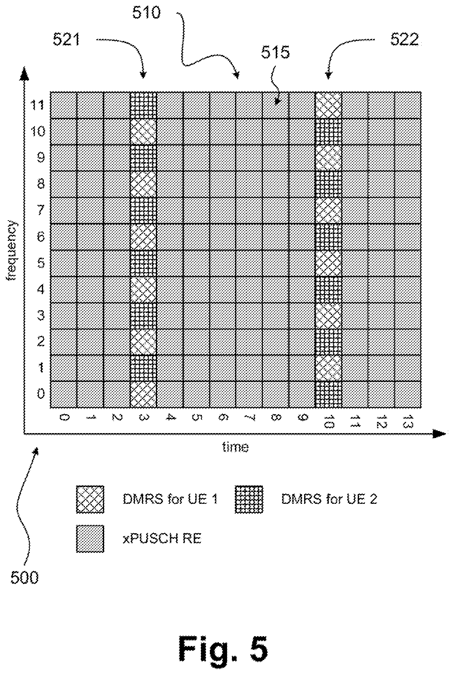

Fig. 5 illustrates an RB structure for IFDMA based DMRS for an RPF of two with frequency hopping, in accordance with some embodiments of the disclosure. An RB structure 500 may comprise an RB 510 with REs 515 distributed across a plurality of OFDM symbols in time (e.g., OFDM symbols from 0 through 13) and across a plurality of subcarrier frequencies (e.g., subcarrier frequencies from 0 through 11). RB structure 500 may correspond to an implementation of IFDMA with an RPF of two.

DMRS may be carried in a first OFDM symbol 521 (e.g., OFDM symbol 3) and a second OFDM symbol 522 (e.g., OFDM symbol 10). In first OFDM symbol 521, DMRS for a first UE may have a first comb configuration, and DMRS for a second UE may have a second comb configuration. For first OFDM symbol 521, the first configuration may span every second subcarrier frequency, beginning with subcarrier frequency 0. The second configuration may span every second subcarrier frequency, beginning with subcarrier frequency 1.

In second OFDM symbol 522, DMRS for the first UE may have a third comb configuration, and the DMRS for the second UE may have a fourth configuration. For second OFDM symbol 522, the third configuration may span every second subcarrier frequency, beginning with subcarrier frequency 1. The fourth configuration may span every second subcarrier frequency, beginning with subcarrier frequency 0.

In some embodiments, different comb offsets may be used for different DMRS combs and/or for different OFDM symbols. A starting comb offset may be denoted as $k$, a comb offset for DMRS in first OFDM symbol 521 (e.g., DMRS in a first slot of a subframe of RB 510) may be *(k+xl) mod RPF,* and a comb offset for DMRS in second OFDM symbol 522 (e.g., DMRS in a second slot of the subframe of RB 510) may be *(k+x2) mod RPF*. For example, as depicted in Fig. 2, *x1* may a first value (e.g., a value of 0), and *x2* may have a second value (e.g., a value of 1). A difference between *x2* and *x1* may be 1, which may lead to a relative offset of 1 between combs for the same UE in first OFDM symbol 521 and second OFDM symbol 522.

In various embodiments, the establishment of *x1* and *x2* may be predetermined, or may be configured by higher layer signaling, or may be configured by Downlink Control Indication (DCI), or may be determined by the value of k.

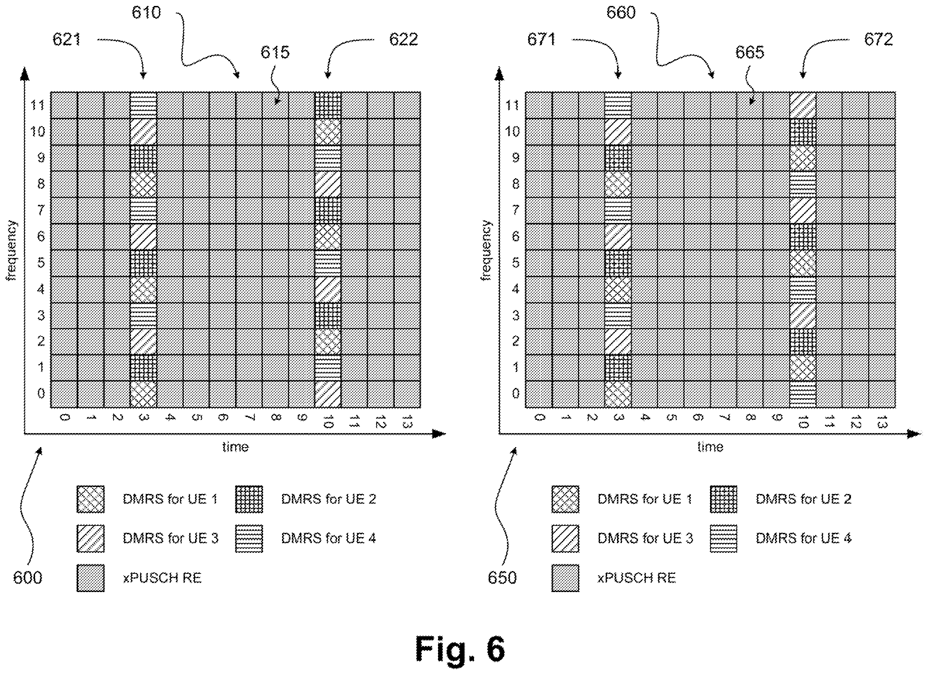

Fig. 6 illustrates RB structures for IFDMA based DMRS for an RPF of four with frequency hopping, in accordance with some embodiments of the disclosure. Fig. 6 includes a first RB structure 600 and a second RB structure 650.

First RB structure 600 may comprise an RB 610 with REs 615 distributed across a plurality of OFDM symbols in time (e.g., OFDM symbols from 0 through 13) and across a plurality of subcarrier frequencies (e.g., subcarrier frequencies from 0 through 11). RB structure 600 may correspond to an implementation of IFDMA with an RPF of four.

DMRS may be carried in a first OFDM symbol 621 (e.g., OFDM symbol 3), and a second OFDM symbol 622 (e.g., OFDM symbol 10). In first OFDM symbol 621, DMRS for a first UE may have a first comb configuration, DMRS for a second UE may have a second comb configuration, DMRS for a third UE may have a third comb configuration, and DMRS for a fourth UE may have a fourth comb configuration. For first OFDM symbol 621, the first configuration may span every fourth subcarrier frequency, beginning with subcarrier frequency 0. The second configuration may span every fourth subcarrier frequency, beginning with subcarrier frequency 1. The third configuration may span every fourth subcarrier frequency, beginning with subcarrier frequency 2. The fourth configuration may span every fourth subcarrier frequency, beginning with subcarrier frequency 3.

In second OFDM symbol 622, DMRS for the first UE may have a fifth comb configuration, DMRS for the second UE may have a sixth configuration, DMRS for the third UE may have a seventh configuration, and DMRS for the fourth UE may have an eighth configuration. For second OFDM symbol 622, the fifth configuration may span every fourth subcarrier frequency, beginning with subcarrier frequency 2. The second configuration may span every fourth subcarrier frequency, beginning with subcarrier frequency 3. The third configuration may span every fourth subcarrier frequency, beginning with subcarrier frequency 0. The fourth configuration may span every fourth subcarrier frequency, beginning with subcarrier frequency 1.

A starting comb offset may be denoted as $k$, a comb offset for DMRS in first OFDM symbol 621 (e.g., DMRS in a first slot of a subframe of RB 610) may be *(k+xl) mod RPF,* and a comb offset for DMRS in second OFDM symbol 622 (e.g., DMRS in a second slot of the subframe of RB 610) may be *(k+x2) mod RPF*. For example, as depicted in Fig. 2, *x1* may a first value (e.g., a value of 0), and *x2* may have a second value (e.g., a value of 2). A difference between *x2* and *x1* may be 2, which may lead to a relative offset of 2 between combs for the same UE in first OFDM symbol 621 and second OFDM symbol 622.

In various embodiments, the establishment of *x1* and *x2* may be predetermined, or may be configured by higher layer signaling, or may be configured by DCI, or may be determined by the value of k.

Second RB structure 650 may comprise an RB 660 with REs 665 distributed across a plurality of OFDM symbols in time (e.g., OFDM symbols from 0 through 13) and across a plurality of subcarrier frequencies (e.g., subcarrier frequencies from 0 through 11). RB structure 650 may correspond to a structure of IFDMA with an RPF of four.

DMRS may be carried in a first OFDM symbol 671 (e.g., OFDM symbol 3), and a second OFDM symbol 672 (e.g., OFDM symbol 10). In first OFDM symbol 671, DMRS for a first UE may have a first comb configuration, DMRS for a second UE may have a second comb configuration, DMRS for a third UE may have a third comb configuration, and DMRS for a fourth UE may have a fourth comb configuration. For first OFDM symbol 671, the first configuration may span every fourth subcarrier frequency, beginning with subcarrier frequency 0. The second configuration may span every fourth subcarrier frequency, beginning with subcarrier frequency 1. The third configuration may span every fourth subcarrier frequency, beginning with subcarrier frequency 2. The fourth configuration may span every fourth subcarrier frequency, beginning with subcarrier frequency 3.

In second OFDM symbol 672, DMRS for the first UE may have a fifth comb configuration, DMRS for the second UE may have a sixth configuration, DMRS for the third UE may have a seventh configuration, and DMRS for the fourth UE may have an eighth configuration. For second OFDM symbol 672, the fifth configuration may span every fourth subcarrier frequency, beginning with subcarrier frequency 1. The second configuration may span every fourth subcarrier frequency, beginning with subcarrier frequency 2. The third configuration may span every fourth subcarrier frequency, beginning with subcarrier frequency 3. The fourth configuration may span every fourth subcarrier frequency, beginning with subcarrier frequency 0.

A starting comb offset may be denoted as $k$, a comb offset for DMRS in first OFDM symbol 671 (e.g., DMRS in a first slot of a subframe of RB 660) may be *(k+x1) mod RPF,* and a comb offset for DMRS in second OFDM symbol 672 (e.g., DMRS in a second slot of the subframe of RB 660) may be *(k+x2) mod RPF*. For example, as depicted in Fig.

2, x1 may a first value (e.g., a value of 0), and x2 may have a second value (e.g., a value of 2). A difference between x2 and x1 may be 1, which may lead to a relative offset of 1 between combs for the same UE in first OFDM symbol 671 and second OFDM symbol 672.

In various embodiments, the establishment of x1 and x2 may be predetermined, or may be configured by higher layer signaling, or may be configured by Downlink Control Indication (DCI), or may be determined by the value of k.

For some embodiments, to allow time domain OCC of 2, a difference between x2 and x1 may be 1, then comb hopping such as in RB structure 650 may be implemented.

In some embodiments, the enabling of comb hopping may be predetermined (e.g., by specification), or configured by higher layer signaling, or configured by DCI. In one example, a one-bit hopping indicator may be added in DCI, where a first value (e.g., a value of 0) may indicate that hopping is disabled, and a second value (e.g., a value of 1) may indicate that hopping is enabled. In another example, an extending cyclic shift may indicate whether hopping is enabled or disabled, as in Table 1.

Table 1 : Cyclic Shift Field in UL DCI for RPF of 2

| Cyclic Shift Field in uplink-related DCI format [3] | $n_{\text{DMRS}\lambda}^{(2)}$ | | | | $[w^{(\lambda)}(0)\ w^{(\lambda)}(1)]$ | | | | Starting comb offset |
|---|---|---|---|---|---|---|---|---|---|
| | $\lambda=0$ | $\lambda=1$ | $\lambda=2$ | $\lambda=3$ | $\lambda=0$ | $\lambda=1$ | $\lambda=2$ | $\lambda=3$ | |
| 000 | 0 | 6 | 3 | 9 | [1 1] | [1 1] | [1 -1] | [1 -1] | 0, no hopping |
| 001 | 6 | 0 | 9 | 3 | [1 -1] | [1 -1] | [1 1] | [1 1] | 0, no hopping |
| 010 | 3 | 9 | 6 | 0 | [1 -1] | [1 -1] | [1 1] | [1 1] | 1, no hopping |
| 011 | 4 | 10 | 7 | 1 | [1 1] | [1 1] | [1 1] | [1 1] | 1, no hopping |
| 100 | 2 | 8 | 5 | 11 | [1 1] | [1 1] | [1 1] | [1 1] | 0, hopping |
| 101 | 8 | 2 | 11 | 5 | [1 -1] | [1 -1] | [1 -1] | [1 -1] | 0, hopping |
| 110 | 10 | 4 | 1 | 7 | [1 -1] | [1 -1] | [1 -1] | [1 -1] | 1, hopping |
| 111 | 9 | 3 | 0 | 6 | [1 1] | [1 1] | [1 -1] | [1 -1] | 1, hopping |

In some embodiments, various DMRS generation schemes for an RPF of 2, an RPF of 4, and legacy LTE DMRS (e.g., a Release- 10 DMRS, with no IFDMA) may be supported dynamically, with enhanced control signaling. In one option, a selection between the various DMRS generation schemes may be configured by higher layer signaling. However, such an indication of DMRS generation scheme might have a reduced flexibility. Accordingly, to allow a more flexible DMRS signal generation, a DMRS generation scheme may be configured via DCI.

For some embodiments, a DMRS generation scheme may be indicated by a cyclic shift field in DCI. One additional bit may be added in the cyclic shift field to indicate various types of DMRS generation schemes. Table 2 illustrates an example for such a cyclic shift field indication.

Table 2: example Cyclic Shift Field indication

| Cyclic Shift Field in uplink-related DCI format [3] | $n_{\text{DMRS}\lambda}^{(2)}$ | | | | $w^{(\lambda)}(0)\ w^{(\lambda)}(1)$ | | | | comb offset |
|---|---|---|---|---|---|---|---|---|---|
| | $\lambda=0$ | $\lambda=1$ | $\lambda=2$ | $\lambda=3$ | $\lambda=0$ | $\lambda=1$ | $\lambda=2$ | $\lambda=3$ | |
| 0000 | 0 | 6 | 3 | 9 | [1 1] | [1 1] | [1 -1] | [1 -1] | no IFDMA |
| 0001 | 6 | 0 | 9 | 3 | [1 -1] | [1 -1] | [1 1] | [1 1] | no IFDMA |
| 0010 | 3 | 9 | 6 | 0 | [1 -1] | [1 -1] | [1 1] | [1 1] | no IFDMA |
| 0011 | 4 | 10 | 7 | 1 | [1 1] | [1 1] | [1 1] | [1 1] | no IFDMA |

(continued)

| Cyclic Shift Field in uplink-related DCI format [3] | $n^{(2)}_{\text{DMRS}\lambda}$ | | | | $w^{(\lambda)}(0)\ w^{(\lambda)}(1)$ | | | | comb offset |
|---|---|---|---|---|---|---|---|---|---|
| | $\lambda = 0$ | $\lambda = 1$ | $\lambda=2$ | $\lambda=3$ | $\lambda = 0$ | $\lambda=1$ | $\lambda=2$ | $\lambda=3$ | |
| 0100 | 2 | 8 | 5 | 11 | [1 1] | [1 1] | [1 1] | [1 1] | 0, RPF=2 |
| 0101 | 8 | 2 | 11 | 5 | [1 -1] | [1 -1] | [1 -1] | [1 -1] | 0, RPF=2 |
| 0110 | 10 | 4 | 1 | 7 | [1 -1] | [1 -1] | [1 -1] | [1 -1] | 1, RPF=2 |
| 0111 | 9 | 3 | 0 | 6 | [1 1] | [1 1] | [1 -1] | [1 -1] | 1, RPF=2 |
| 1000 | 0 | 6 | 3 | 9 | [1 1] | [1 1] | [1 -1] | [1 -1] | 0, RPF=4 |
| 1001 | 6 | 0 | 9 | 3 | [1 -1] | [1 -1] | [1 1] | [1 1] | 0, RPF=4 |
| 1010 | 3 | 9 | 6 | 0 | [1 -1] | [1 -1] | [1 1] | [1 1] | 1, RPF=4 |
| 1011 | 4 | 10 | 7 | 1 | [1 1] | [1 1] | [1 1] | [1 1] | 1, RPF=4 |
| 1100 | 2 | 8 | 5 | 11 | [1 1] | [1 1] | [1 1] | [1 1] | 2, RPF=4 |
| 1101 | 8 | 2 | 11 | 5 | [1 -1] | [1 -1] | [1 -1] | [1 -1] | 2, RPF=4 |
| 1110 | 10 | 4 | 1 | 7 | [1 -1] | [1 -1] | [1 -1] | [1 -1] | 3, RPF=4 |
| 1111 | 9 | 3 | 0 | 6 | [1 1] | [1 1] | [1 -1] | [1 -1] | 3, RPF=4 |

In some embodiments, both a DMRS generation scheme and a hopping enable indicator may be provided by a cyclic shift field in DCI. Table 3 illustrates an example for such a cyclic shift field indication.

Table 3: example Cyclic Shift Field indication

| Cyclic Shift Field in uplink-related DCI format [3] | $n^{(2)}_{\text{DMRS}\lambda}$ | | | | $W^{(\lambda)}(0)\ w^{(\lambda)}(1)$ | | | | comb offset |
|---|---|---|---|---|---|---|---|---|---|
| | $\lambda = 0$ | $\lambda = 1$ | $\lambda=2$ | $\lambda=3$ | $\lambda = 0$ | $\lambda=1$ | $\lambda=2$ | $\lambda=3$ | |
| 0000 | 0 | 6 | 3 | 9 | [1 1] | [1 1] | [1 -1] | [1 -1] | no IFDMA |
| 0001 | 6 | 0 | 9 | 3 | [1 -1] | [1 -1] | [1 1] | [1 1] | 0, RPF=2, hopping |
| 0010 | 3 | 9 | 6 | 0 | [1 -1] | [1 -1] | [1 1] | [1 1] | 1, RPF=2, hopping |
| 0011 | 4 | 10 | 7 | 1 | [1 1] | [1 1] | [1 1] | [1 1] | no IFDMA |
| 0100 | 2 | 8 | 5 | 11 | [1 1] | [1 1] | [1 1] | [1 1] | 0, RPF=2, no hopping |
| 0101 | 8 | 2 | 11 | 5 | [1 -1] | [1 -1] | [1 -1] | [1 -1] | 0, RPF=2, no hopping |
| 0110 | 10 | 4 | 1 | 7 | [1 -1] | [1 -1] | [1 -1] | [1 -1] | 1, RPF=2, no hopping |
| 0111 | 9 | 3 | 0 | 6 | [1 1] | [1 1] | [1 -1] | [1 -1] | 1, RPF=2, no hopping |
| 1000 | 0 | 6 | 3 | 9 | [1 1] | [1 1] | [1 -1] | [1 -1] | 0, RPF=4, no hopping |
| 1001 | 6 | 0 | 9 | 3 | [1 -1] | [1 -1] | [1 1] | [1 1] | 0, RPF=4, hopping |
| 1010 | 3 | 9 | 6 | 0 | [1 -1] | [1 -1] | [1 1] | [1 1] | 1, RPF=4, hopping |

(continued)

| Cyclic Shift Field in uplink-related DCI format [3] | $n_{\mathrm{DMRS}\lambda}^{(2)}$ | | | | $W^{(\lambda)}(0)\ w^{(\lambda)}(1)$ | | | | comb offset |
|---|---|---|---|---|---|---|---|---|---|
| | $\lambda = 0$ | $\lambda = 1$ | $\lambda=2$ | $\lambda=3$ | $\lambda = 0$ | $\lambda=1$ | $\lambda=2$ | $\lambda=3$ | |
| 1011 | 4 | 10 | 7 | 1 | [1 1] | [1 1] | [1 1] | [1 1] | 1, RPF=4, no hopping |
| 1100 | 2 | 8 | 5 | 11 | [1 1] | [1 1] | [1 1] | [1 1] | 2, RPF=4, no hopping |
| 1101 | 8 | 2 | 11 | 5 | [1 -1] | [1 -1] | [1 -1] | [1 -1] | 2, RPF=4, hopping |
| 1110 | 10 | 4 | 1 | 7 | [1 -1] | [1 -1] | [1 -1] | [1 -1] | 3, RPF=4, hopping |
| 1111 | 9 | 3 | 0 | 6 | [1 1] | [1 1] | [1 -1] | [1 -1] | 3, RPF=4, no hopping |

In some embodiments, a DMRS generation scheme may be indicated by an indicator defined in a UL grant, which may be used to determine whether Release 10 DMRS, IFDMA DMRS with RPF of 2, and IFDMA DMRS with RPF of 4 are utilized. Table 4 illustrates one example for a two-bits DMRS generation scheme indicator.

Table 4: two-bit DMRS generation scheme indicator

| DMRS generation scheme indicator | indication |
|---|---|
| 00 | No IFDMA |
| 01 | IFDMA RPF=2 |
| 10 | IFDMA RPF=4 |
| 11 | reserved |

In some embodiments, an indication of comb offset in a cyclic shift field may be different. Table 5 illustrates one example for an IFDMA DMRS scheme with an RPF of 2, and Table 6 illustrates one example for an IFDMA DMRS scheme with an RPF of 4.

Table 5: example Cyclic Shift Field in UL PCI for RPF of 2

| Cyclic Shift Field in uplink-related DCI format [3] | $\lambda = 0$ | $\lambda = 1$ | $n_{\mathrm{DMRS}\lambda}^{(2)}$ $\lambda=2$ | $\lambda=3$ | $[w^{(\lambda)}(0)\ w^{(\lambda)}(1)]$ | | | | Starting comb offset/ comb offset |
|---|---|---|---|---|---|---|---|---|---|
| | | | | | $\lambda=0$ | $\lambda=1$ | $\lambda=2$ | $\lambda=3$ | |
| 000 | 0 | 6 | 3 | 9 | [1 1] | [1 1] | [1 -1] | [1 -1] | 0 |
| 001 | 6 | 0 | 9 | 3 | [1 -1] | [1 -1] | [1 1] | [1 1] | 0 |
| 010 | 3 | 9 | 6 | 0 | [1 -1] | [1 -1] | [1 1] | [1 1] | 1 |
| 011 | 4 | 10 | 7 | 1 | [1 1] | [1 1] | [1 1] | [1 1] | 1 |
| 100 | 2 | 8 | 5 | 11 | [1 1] | [1 1] | [1 1] | [1 1] | 0 |
| 101 | 8 | 2 | 11 | 5 | [1 -1] | [1 -1] | [1 -1] | [1 -1] | 0 |

(continued)

| Cyclic Shift Field in uplink-related DCI format [3] | $\lambda=0$ | $\lambda=1$ | $n_{DMRS\lambda}^{(2)}$ $\lambda=2$ | $\lambda=3$ | $[w^{(\lambda)}(0)\ w^{(\lambda)}(1)]$ | | | | Starting comb offset/ comb offset |
|---|---|---|---|---|---|---|---|---|---|
| | | | | | $\lambda=0$ | $\lambda=1$ | $\lambda=2$ | $\lambda=3$ | |
| 110 | 10 | 4 | 1 | 7 | [1 -1] | [1 -1] | [1 -1] | [1 -1] | 1 |
| 111 | 9 | 3 | 0 | 6 | [1 1] | [1 1] | [1 -1] | [1 -1] | 1 |

Table 6: example Cyclic Shift Field in UL DCI for RPF of 4

| Cyclic Shift Field in uplink-related DCI format [3] | $\lambda=0$ | $\lambda=1$ | $n_{DMRS\lambda}^{(2)}$ $\lambda=2$ | $\lambda=3$ | $[w^{(\lambda)}(0)\ w^{(\lambda)}(1)]$ | | | | Starting comb offset/ comb offset |
|---|---|---|---|---|---|---|---|---|---|
| | | | | | $\lambda=0$ | $\lambda=1$ | $\lambda=2$ | $\lambda=3$ | |
| 000 | 0 | 6 | 3 | 9 | [1 1] | [1 1] | [1 -1] | [1 -1] | 0 |
| 001 | 6 | 0 | 9 | 3 | [1 -1] | [1 -1] | [1 1] | [1 1] | 0 |
| 010 | 3 | 9 | 6 | 0 | [1 -1] | [1 -1] | [1 1] | [1 1] | 1 |
| 011 | 4 | 10 | 7 | 1 | [1 1] | [1 1] | [1 1] | [1 1] | 1 |
| 100 | 2 | 8 | 5 | 11 | [1 1] | [1 1] | [1 1] | [1 1] | 2 |
| 101 | 8 | 2 | 11 | 5 | [1 -1] | [1 -1] | [1 -1] | [1 -1] | 2 |
| 110 | 10 | 4 | 1 | 7 | [1 -1] | [1 -1] | [1 -1] | [1 -1] | 3 |
| 111 | 9 | 3 | 0 | 6 | [1 1] | [1 1] | [1 -1] | [1 -1] | 3 |

In some embodiments in which hopping is configured through a cyclic shift table, Table 1 may be utilized for IFDMA with an RPF of 2, and Table 7 may be utilized for IFDMA with an RPF of 4.

Table 7: example Cyclic Shift Field in UL DCI for RPF of 4, with hopping Cyclic Shift

| Cyclic Shift Field in uplink-related DCI format [3] | $\lambda=0$ | $\lambda=1$ | $n_{DMRS\lambda}^{(2)}$ $\lambda=2$ | $\lambda=3$ | $[w^{(\lambda)}(0)\ w^{(\lambda)}(1)]$ | | | | Starting comb offset |
|---|---|---|---|---|---|---|---|---|---|
| | | | | | $\lambda=0$ | $\lambda=1$ | $\lambda=2$ | $\lambda=3$ | |
| 000 | 0 | 6 | 3 | 9 | [1 1] | [1 1] | [1 -1] | [1 -1] | 0, no hopping |
| 001 | 6 | 0 | 9 | 3 | [1 -1] | [1 -1] | [1 1] | [1 1] | 0, hopping |
| 010 | 3 | 9 | 6 | 0 | [1 -1] | [1 -1] | [1 1] | [1 1] | 1, hopping |
| 011 | 4 | 10 | 7 | 1 | [1 1] | [1 1] | [1 1] | [1 1] | 1, no hopping |

(continued)

| Cyclic Shift Field in uplink-related DCI format [3] | $\lambda = 0$ | $\lambda = 1$ | $n^{(2)}_{\text{DM RS}\lambda}$ $\lambda=2$ | $\lambda=3$ | $[w^{(\lambda)}(0)\ w^{(\lambda)}(1)]$ $\lambda=0$ | $\lambda=1$ | $\lambda=2$ | $\lambda=3$ | Starting comb offset |
|---|---|---|---|---|---|---|---|---|---|
| 100 | 2 | 8 | 5 | 11 | [1 1] | [1 1] | [1 1] | [1 1] | 2, no hopping |
| 101 | 8 | 2 | 11 | 5 | [1 -1] | [1 -1] | [1 -1] | [1 -1] | 2, hopping |
| 110 | 10 | 4 | 1 | 7 | [1 -1] | [1 -1] | [1 -1] | [1 -1] | 3, hopping |
| 111 | 9 | 3 | 0 | 6 | [1 1] | [1 1] | [1 -1] | [1 -1] | 3, no hopping |

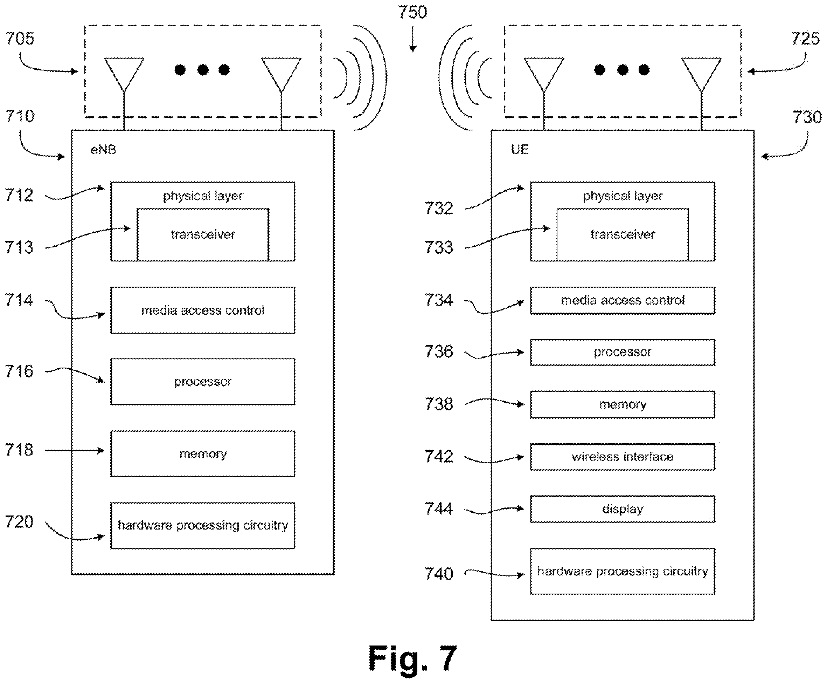

Fig. 7 illustrates an eNB and a UE, in accordance with some embodiments of the disclosure. Fig. 7 includes block diagrams of an eNB 710 and a UE 730 which are operable to co-exist with each other and other elements of an LTE network. High-level, simplified architectures of eNB 710 and UE 730 are described so as not to obscure the embodiments. It should be noted that in some embodiments, eNB 710 may be a stationary non-mobile device.

eNB 710 is coupled to one or more antennas 705, and UE 730 is similarly coupled to one or more antennas 725. However, in some embodiments, eNB 710 may incorporate or comprise antennas 705, and UE 730 in various embodiments may incorporate or comprise antennas 725.

In some embodiments, antennas 705 and/or antennas 725 may comprise one or more directional or omni-directional antennas, including monopole antennas, dipole antennas, loop antennas, patch antennas, microstrip antennas, coplanar wave antennas, or other types of antennas suitable for transmission of RF signals. In some MIMO (multiple-input and multiple output) embodiments, antennas 705 are separated to take advantage of spatial diversity.

eNB 710 and UE 730 are operable to communicate with each other on a network, such as a wireless network. eNB 710 and UE 730 may be in communication with each other over a wireless communication channel 750, which has both a downlink path from eNB 710 to UE 730 and an uplink path from UE 730 to eNB 710.

As illustrated in Fig. 7, in some embodiments, eNB 710 may include a physical layer circuitry 712, a MAC (media access control) circuitry 714, a processor 716, a memory 718, and a hardware processing circuitry 720. A person skilled in the art will appreciate that other components not shown may be used in addition to the components shown to form a complete eNB.

In some embodiments, physical layer circuitry 712 includes a transceiver 713 for providing signals to and from UE 730. Transceiver 713 provides signals to and from UEs or other devices using one or more antennas 705. In some embodiments, MAC circuitry 714 controls access to the wireless medium. Memory 718 may be, or may include, a storage media/medium such as a magnetic storage media (e.g., magnetic tapes or magnetic disks), an optical storage media (e.g., optical discs), an electronic storage media (e.g., conventional hard disk drives, solid-state disk drives, or flash-memory-based storage media), or any tangible storage media or non-transitory storage media. Hardware processing circuitry 720 may comprise logic devices or circuitry to perform various operations. In some embodiments, processor 716 and memory 718 are arranged to perform the operations of hardware processing circuitry 720, such as operations described herein with reference to logic devices and circuitry within eNB 710 and/or hardware processing circuitry 720.

Accordingly, in some embodiments, eNB 710 may be a device comprising an application processor, a memory, one or more antenna ports, and an interface for allowing the application processor to communicate with another device.

As is also illustrated in Fig. 7, in some embodiments, UE 730 may include a physical layer circuitry 732, a MAC circuitry 734, a processor 736, a memory 738, a hardware processing circuitry 740, a wireless interface 742, and a display 744. A person skilled in the art would appreciate that other components not shown may be used in addition to the components shown to form a complete UE.

In some embodiments, physical layer circuitry 732 includes a transceiver 733 for providing signals to and from eNB 710 (as well as other eNBs). Transceiver 733 provides signals to and from eNBs or other devices using one or more antennas 725. In some embodiments, MAC circuitry 734 controls access to the wireless medium. Memory 738 may be, or may include, a storage media/medium such as a magnetic storage media (e.g., magnetic tapes or magnetic disks), an optical storage media (e.g., optical discs), an electronic storage media (e.g., conventional hard disk drives, solid-state disk drives, or flash-memory-based storage media), or any tangible storage media or non-transitory storage media. Wireless interface 742 may be arranged to allow the processor to communicate with another device. Display 744 may provide a visual and/or tactile display for a user to interact with UE 730, such as a touch-screen display.

Hardware processing circuitry 740 may comprise logic devices or circuitry to perform various operations. In some embodiments, processor 736 and memory 738 may be arranged to perform the operations of hardware processing circuitry 740, such as operations described herein with reference to logic devices and circuitry within UE 730 and/or hardware processing circuitry 740.

Accordingly, in some embodiments, UE 730 may be a device comprising an application processor, a memory, one or more antennas, a wireless interface for allowing the application processor to communicate with another device, and a touch-screen display.

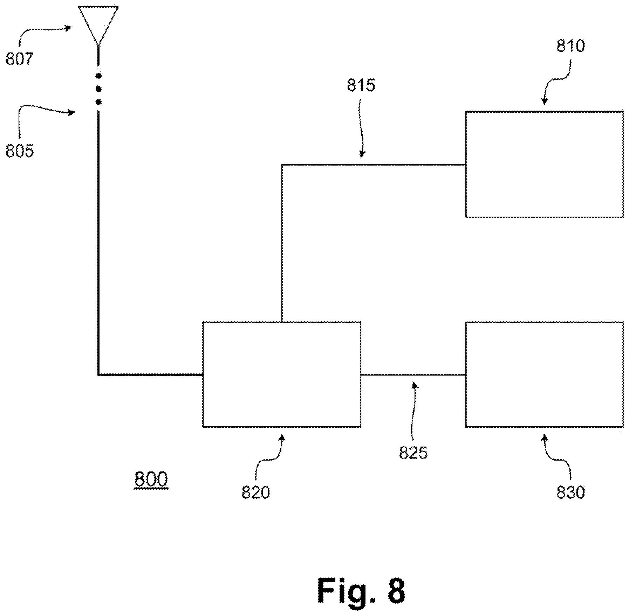

Elements of Fig. 7, and elements of other figures having the same names or reference numbers, can operate or function in the manner described herein with respect to any such figures (although the operation and function of such elements is not limited to such descriptions). For example, Figs. 8-11 and 16 also depict embodiments of eNBs, hardware processing circuitry of eNBs, UEs, and/or hardware processing circuitry of UEs, and the embodiments described with respect to Fig. 7 and Figs. 8-11 and 16 can operate or function in the manner described herein with respect to any of the figures.

In addition, although eNB 710 and UE 730 are each described as having several separate functional elements, one or more of the functional elements may be combined and may be implemented by combinations of software-configured elements and/or other hardware elements. In some embodiments of this disclosure, the functional elements can refer to one or more processes operating on one or more processing elements. Examples of software and/or hardware configured elements include Digital Signal Processors (DSPs), one or more microprocessors, DSPs, Field-Programmable Gate Arrays (FPGAs), Application Specific Integrated Circuits (ASICs), Radio-Frequency Integrated Circuits (RFICs), and so on.

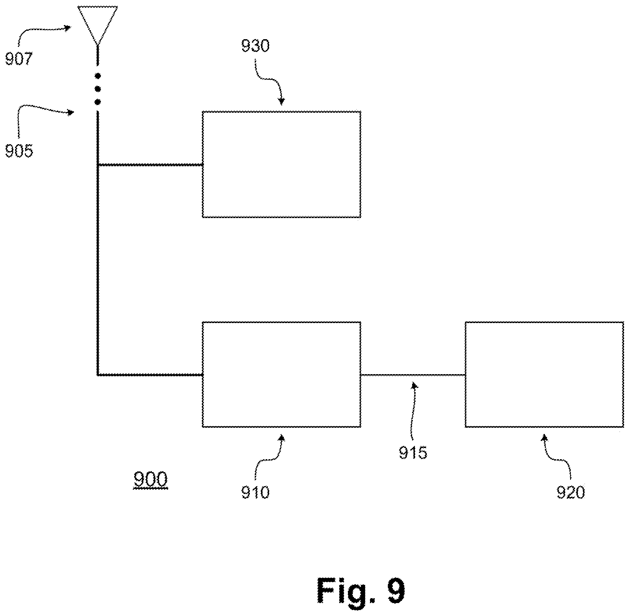

Fig. 8 illustrates hardware processing circuitries for a UE for control signaling of UL DMRS enhancement in FD-MIMO systems, in accordance with some embodiments of the disclosure. Fig. 9 illustrates hardware processing circuitries for a UE for UL IFDMA based DMRS in enhanced FD-MIMO systems, in accordance with some embodiments of the disclosure. With reference to Fig. 7, a UE may include various hardware processing circuitries discussed herein (such as hardware processing circuitry 800 of Fig. 8 and hardware processing circuitry 900 of Fig. 9), which may in turn comprise logic devices and/or circuitry operable to perform various operations. For example, in Fig. 7, UE 730 (or various elements or components therein, such as hardware processing circuitry 740, or combinations of elements or components therein) may include part of, or all of, these hardware processing circuitries.

In some embodiments, one or more devices or circuitries within these hardware processing circuitries may be implemented by combinations of software-configured elements and/or other hardware elements. For example, processor 736 (and/or one or more other processors which UE 730 may comprise), memory 738, and/or other elements or components ofUE 730 (which may include hardware processing circuitry 740) may be arranged to perform the operations of these hardware processing circuitries, such as operations described herein with reference to devices and circuitry within these hardware processing circuitries. In some embodiments, processor 736 (and/or one or more other processors which UE 730 may comprise) may be a baseband processor.

Returning to Fig. 8, an apparatus of UE 730 (or another UE or mobile handset), which may be operable to communicate with one or more eNBs on a wireless network, may comprise hardware processing circuitry 800. In some embodiments, hardware processing circuitry 800 may comprise one or more antenna ports 805 operable to provide various transmissions over a wireless communication channel (such as wireless communication channel 750). Antenna ports 805 may be coupled to one or more antennas 807 (which may be antennas 725). In some embodiments, hardware processing circuitry 800 may incorporate antennas 807, while in other embodiments, hardware processing circuitry 800 may merely be coupled to antennas 807.

Antenna ports 805 and antennas 807 may be operable to provide signals from a UE to a wireless communications channel and/or an eNB, and may be operable to provide signals from an eNB and/or a wireless communications channel to a UE. For example, antenna ports 805 and antennas 807 may be operable to provide transmissions from UE 730 to wireless communication channel 750 (and from there to eNB 710, or to another eNB). Similarly, antennas 807 and antenna ports 805 may be operable to provide transmissions from a wireless communication channel 750 (and beyond that, from eNB 710, or another eNB) to UE 730.

Hardware processing circuitry 800 may comprise various circuitries operable in accordance with the various embodiments discussed herein. With reference to Fig. 8, hardware processing circuitry 800 may comprise a first circuitry 810, a second circuitry 820, and/or a third circuitry 830. First circuitry 810 may be operable to identify a range of RBs. Second circuitry 820 may be operable to process a transmission carrying one or more RB indicators for the range of RBs. First circuitry 810 may be operable to provide information regarding the range of RBs to second circuitry 820 over an interface 815. Third circuitry 830 may be operable to determine, based on the one or more RB indicators, one or more overlapping sub-ranges of RBs of the range of RBs, and one or more non-overlapping subranges of RBs of the range of RBs. Second circuitry 820 may be operable to provide information regarding the RB indicators to third circuitry 830 over an interface 825.

In some embodiments, the one or more RB indicators may include an indicator having one of: a first value, or a second value. The first value may indicate that RBs from a first RB of the range of RBs up to a second RB of the range of RBs are overlapping RBs. The second value may indicate that no RBs of the range of RBs are overlapping RBs. For some embodiments, the indicator may have one of: the first value, the second value, or a third value. The third value may indicate that RBs from the second RB up to a third RB are overlapping RBs. In some embodiments, one or more of the first RB, the second RB, and the third RB is an index into a range of RBs.

For some embodiments, the one or more RB indicators may include an indicator having one of a plurality of values indexing into the range of RBs to indicate a subrange of overlapping RBs. In some embodiments, the indicator may have one of the plurality of values indexing into the range of RBs, or another value denoting that none of the range of RBs are overlapping RBs.

In some embodiments, the one or more RB indicators may comprise a first indicator indicating a first sub-range of RBs of the range of RBs and a second indicator indicating a second sub-range of RBs of the range of RBs. The RBs of the first sub-range of RBs may be non-overlapping RBs, and the RBs of the second sub-range of RBs may be overlapping RBs.

For some embodiments, the one or more RB indicators may include a bitmap with one or more indicator bits respectively corresponding to one or more RB segments of the range of RBs. In some embodiments, the indicator bits may have one of: a first value indicating that the RBs of the corresponding RB segment are overlapping, and a second value indicating that the RBs of the corresponding RB segment are non-overlapping.

In some embodiments, the transmission may be an RRC transmission. For some embodiments, the transmission may be a UL grant.

In some embodiments, first circuitry 810, second circuitry 820, and/or third circuitry 830 may be implemented as separate circuitries. In other embodiments, first circuitry 810, second circuitry 820, and third circuitry 830 may be combined and implemented together in a circuitry without altering the essence of the embodiments.

Returning to Fig. 9, an apparatus of UE 730 (or another UE or mobile handset), which may be operable to communicate with one or more eNBs on a wireless network, may comprise hardware processing circuitry 900. In some embodiments, hardware processing circuitry 900 may comprise one or more antenna ports 905 operable to provide various transmissions over a wireless communication channel (such as wireless communication channel 750). Antenna ports 905 may be coupled to one or more antennas 907 (which may be antennas 725). In some embodiments, hardware processing circuitry 900 may incorporate antennas 907, while in other embodiments, hardware processing circuitry 900 may merely be coupled to antennas 907.

Antenna ports 905 and antennas 907 may be operable to provide signals from a UE to a wireless communications channel and/or an eNB, and may be operable to provide signals from an eNB and/or a wireless communications channel to a UE. For example, antenna ports 905 and antennas 907 may be operable to provide transmissions from UE 730 to wireless communication channel 750 (and from there to eNB 710, or to another eNB). Similarly, antennas 907 and antenna ports 905 may be operable to provide transmissions from a wireless communication channel 750 (and beyond that, from eNB 710, or another eNB) to UE 730.

Hardware processing circuitry 900 may comprise various circuitries operable in accordance with the various embodiments discussed herein. With reference to Fig. 9, hardware processing circuitry 900 may comprise a first circuitry 910, a second circuitry 920, and/or a third circuitry 930. First circuitry 910 may be operable to unmap an IFDMA based DMRS from one or more REs of a RB in a comb configuration. Second circuitry 920 may be operable to process the IFDMA based DMRS. First circuitry 910 may be operable to provide information regarding the IFDMA based DMRS to second circuitry 920 over an interface 915. The comb configuration may span one or more subcarrier frequencies of the RB and may begin at a comb offset subcarrier frequency. In some embodiments, third circuitry 930 may be operable to generate a transmission carrying one or more indicators selected from: a starting comb offset indicator, a hopping enable indicator, or a DMRS type indicator.

In some embodiments, the one or more REs may be within one of: a central OFDM symbol of a first slot of the RB, or a central OFDM symbol of a second slot of the RB. For some embodiments, one or more of the indicators may be carried in a DCI of the transmission. In some embodiments, the transmission may carry higher-layer signaling, and one or more of the indicators is carried in the higher-layer signaling. For some embodiments, the DMRS type indicator may have one of: a first value indicating no IFDMA, a second value indicating IFDMA with an RPF equal to 2, or a third value indicating IFDMA with an RPF equal to 4.

In some embodiments, first circuitry 910, second circuitry 920, and/or third circuitry 930 may be implemented as separate circuitries. In other embodiments, first circuitry 910, second circuitry 920, and third circuitry 930 may be combined and implemented together in a circuitry without altering the essence of the embodiments.

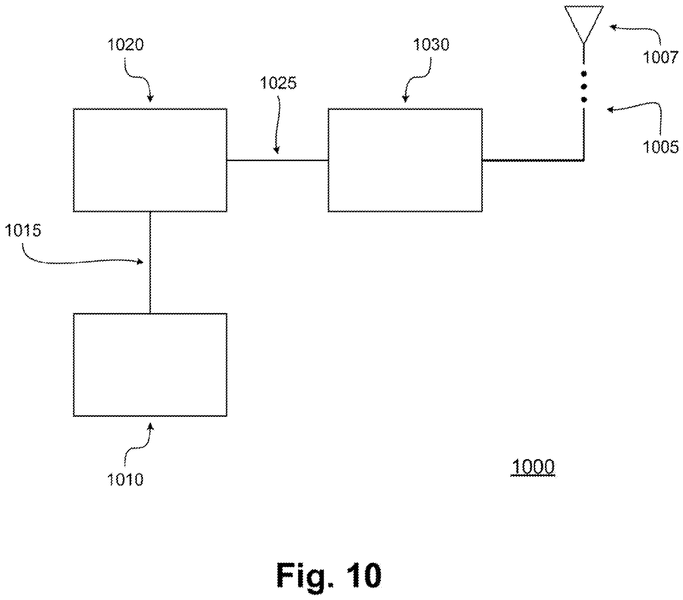

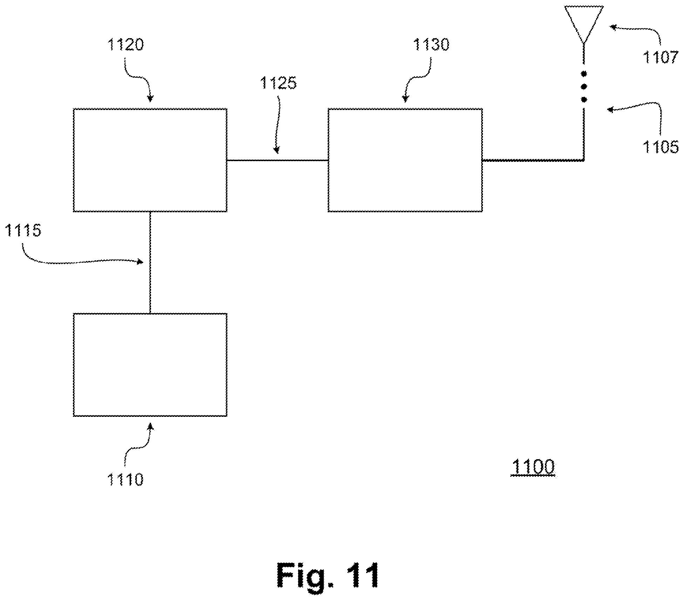

Fig. 10 illustrates hardware processing circuitries for an eNB for control signaling of UL DMRS enhancement in FD-MIMO systems, in accordance with some embodiments of the disclosure. Fig. 11 illustrates hardware processing circuitries for an eNB for UL IFDMA based DMRS in enhanced FD-MIMO systems, in accordance with some embodiments of the disclosure. With reference to Fig. 7, an eNB may include various hardware processing circuitries discussed herein (such as hardware processing circuitry 1000 of Fig. 10 and hardware processing circuitry 1100 of Fig. 11), which may in turn comprise logic devices and/or circuitry operable to perform various operations. For example, in Fig. 7, eNB 710 (or various elements or components therein, such as hardware processing circuitry 720, or combinations of elements or components therein) may include part of, or all of, these hardware processing circuitries.

In some embodiments, one or more devices or circuitries within these hardware processing circuitries may be implemented by combinations of software-configured elements and/or other hardware elements. For example, processor 716 (and/or one or more other processors which eNB 710 may comprise), memory 718, and/or other elements or components of eNB 710 (which may include hardware processing circuitry 720) may be arranged to perform the operations of these hardware processing circuitries, such as operations described herein with reference to devices and circuitry within these hardware processing circuitries. In some embodiments, processor 716 (and/or one or more other processors which eNB 710 may comprise) may be a baseband processor.

Returning to Fig. 10, an apparatus of eNB 710 (or another eNB or base station), which may be operable to communicate with one or more UEs on a wireless network, may comprise hardware processing circuitry 1000. In some embodiments, hardware processing circuitry 1000 may comprise one or more antenna ports 1005 operable to provide various transmissions over a wireless communication channel (such as wireless communication channel 750). Antenna ports 1005 may be coupled to one or more antennas 1007 (which may be antennas 705). In some embodiments, hardware processing circuitry 1000 may incorporate antennas 1007, while in other embodiments, hardware processing circuitry 1000 may merely be coupled to antennas 1007.

Antenna ports 1005 and antennas 1007 may be operable to provide signals from an eNB to a wireless communications channel and/or a UE, and may be operable to provide signals from a UE and/or a wireless communications channel to an eNB. For example, antenna ports 1005 and antennas 1007 may be operable to provide transmissions from eNB 710 to wireless communication channel 750 (and from there to UE 730, or to another UE). Similarly, antennas 1007 and antenna ports 1005 may be operable to provide transmissions from a wireless communication channel 750 (and beyond that, from UE 730, or another UE) to eNB 710.

Hardware processing circuitry 1000 may comprise various circuitries operable in accordance with the various embodiments discussed herein. With reference to Fig. 10, hardware processing circuitry 1000 may comprise a first circuitry 1010, a second circuitry 1020, and/or a third circuitry 1030. First circuitry 1010 may be operable to identify a range of RBs. Second circuitry 1020 may be operable to establish, based on one or more RB indicators, one or more overlapping sub-ranges of RBs of the range of RBs, and one or more non-overlapping sub-ranges of RBs of the range of RBs. First circuitry 1010 may be operable to provide information regarding the range of RBs to second circuitry 1020 over an interface 1015. Third circuitry 1030 may be operable to generate a transmission carrying the one or more RB indicators for the range of RBs. Second circuitry 1020 may be operable to provide information regarding the overlapping sub-ranges of RBs and/or non-overlapping sub-ranges of RBs to third circuitry 1030 over an interface 1025.

In some embodiments, the one or more RB indicators may include an indicator having one of: a first value, or a second value. The first value may indicate that RBs from a first RB of the range of RBs up to a second RB of the range of RBs are overlapping RBs. The second value may indicate that no RBs of the range of RBs are overlapping RBs. For some embodiments, the indicator may have one of: the first value, the second value, or a third value. The third value may indicate that RBs from the second RB up to a third RB are overlapping RBs. In some embodiments, one or more of the first RB, the second RB, and the third RB is an index into a range of RBs.

For some embodiments, the one or more RB indicators may include an indicator having one of a plurality of values indexing into the range of RBs to indicate a subrange of overlapping RBs. In some embodiments, the indicator may have one of the plurality of values indexing into the range of RBs, or another value denoting that none of the range of RBs are overlapping RBs.

In some embodiments, the one or more RB indicators may comprise a first indicator indicating a first sub-range of RBs of the range of RBs and a second indicator indicating a second sub-range of RBs of the range of RBs. The RBs of the first sub-range of RBs may be non-overlapping RBs, and the RBs of the second sub-range of RBs may be overlapping RBs.

For some embodiments, the one or more RB indicators may include a bitmap with one or more indicator bits respectively corresponding to one or more RB segments of the range of RBs. In some embodiments, the indicator bits may have one of: a first value indicating that the RBs of the corresponding RB segment are overlapping, and a second value indicating that the RBs of the corresponding RB segment are non-overlapping.

In some embodiments, the transmission may be an RRC transmission. For some embodiments, the transmission may be a UL grant.

In some embodiments, first circuitry 1010, second circuitry 1020, and/or third circuitry 1030 may be implemented as separate circuitries. In other embodiments, first circuitry 1010, second circuitry 1020, and/or third circuitry 1030 may be combined and implemented together in a circuitry without altering the essence of the embodiments.

Returning to Fig. 11, an apparatus of eNB 710 (or another eNB or base station), which may be operable to communicate with one or more UEs on a wireless network, may comprise hardware processing circuitry 1100. In some embodiments, hardware processing circuitry 1100 may comprise one or more antenna ports 1105 operable to provide various transmissions over a wireless communication channel (such as wireless communication channel 750). Antenna ports 1105 may be coupled to one or more antennas 1107 (which may be antennas 705). In some embodiments, hardware processing circuitry 1100 may incorporate antennas 1107, while in other embodiments, hardware processing circuitry 1100 may merely be coupled to antennas 1107.

Antenna ports 1105 and antennas 1107 may be operable to provide signals from an eNB to a wireless communications channel and/or a UE, and may be operable to provide signals from a UE and/or a wireless communications channel to an eNB. For example, antenna ports 1105 and antennas 1107 may be operable to provide transmissions from eNB 710 to wireless communication channel 750 (and from there to UE 730, or to another UE). Similarly, antennas 1107 and antenna ports 1105 may be operable to provide transmissions from a wireless communication channel 750 (and beyond that, from UE 730, or another UE) to eNB 710.

Hardware processing circuitry 1100 may comprise various circuitries operable in accordance with the various embodiments discussed herein. With reference to Fig. 11, hardware processing circuitry 1100 may comprise a first circuitry 1110, a second circuitry 1120, and/or a third circuitry 1130. First circuitry 1110 may be operable to establish an IFDMA based DMRS. Second circuitry 1120 may be operable to map the IFDMA based DMRS onto one or more first REs in a first comb configuration, and to map the IFDMA based DMRS onto one or more second REs in a second comb configuration. First circuitry 1110 may be operable to provide information regarding the IFDMA based DMRS to second circuitry 1120 over an interface 1115. The first comb configuration may span one or more first subcarrier frequencies of a RB and may begin at a first comb offset subcarrier frequency. The second comb configuration may span one or more second subcarrier frequencies of the RB and may begin at a second comb offset subcarrier frequency different from the first comb offset subcarrier frequency. In some embodiments, third circuitry 1130 may be operable to generate a transmission carrying one or more indicators selected from: a starting comb offset indicator, a hopping enable indicator, or a DMRS type indicator. Second circuitry may be operable to provide information regarding the one or more indicators to third circuitry 1030 over an interface 1125.

In some embodiments, the one or more REs may be within one of: a central OFDM symbol of a first slot of the RB, or a central OFDM symbol of a second slot of the RB. For some embodiments, one or more of the indicators may be carried in a DCI of the transmission. In some embodiments, the transmission may carry higher-layer signaling, and one or more of the indicators is carried in the higher-layer signaling. For some embodiments, the DMRS type indicator may have one of: a first value indicating no IFDMA, a second value indicating IFDMA with an RPF equal to 2, or a third value indicating IFDMA with an RPF equal to 4.

In some embodiments, first circuitry 1110, second circuitry 1120, and/or third circuitry 1130 may be implemented as separate circuitries. In other embodiments, first circuitry 1110, second circuitry 1120, and/or third circuitry 1130 may be combined and implemented together in a circuitry without altering the essence of the embodiments.

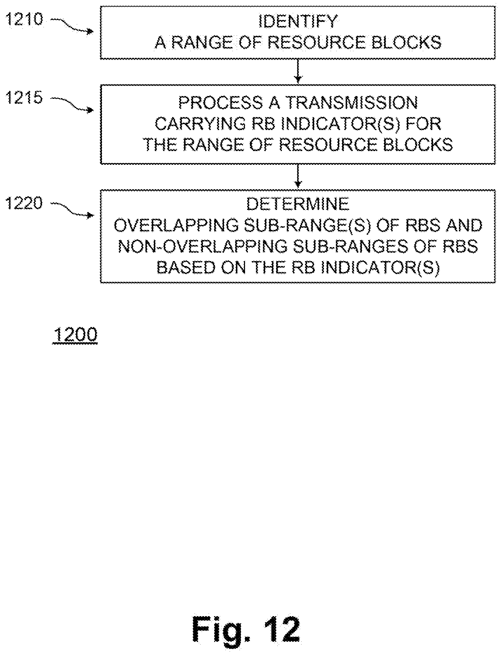

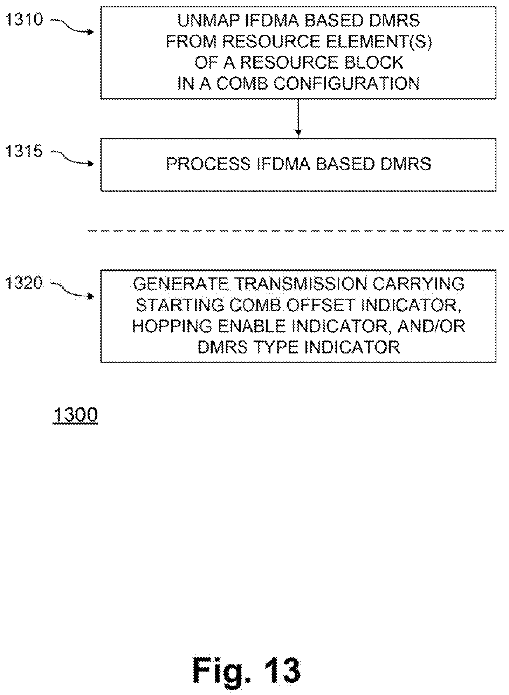

Fig. 12 illustrates methods for a UE for control signaling of UL DMRS enhancement in FD-MIMO systems, in accordance with some embodiments of the disclosure. Fig. 13 illustrates methods for a UE for UL IFDMA based DMRS in enhanced FD-MIMO systems, in accordance with some embodiments of the disclosure. With reference to Fig. 7, methods that may relate to UE 730 and hardware processing circuitry 740 are discussed herein. Although the actions in the method 1200 of Fig. 12 and method 1300 of Fig. 13 are shown in a particular order, the order of the actions can be modified. Thus, the illustrated embodiments can be performed in a different order, and some actions may be performed in parallel. Some of the actions and/or operations listed in Figs. 12 and 13 are optional in accordance with certain embodiments. The numbering of the actions presented is for the sake of clarity and is not intended to prescribe an order of operations in which the various actions must occur. Additionally, operations from the various flows may be utilized in a variety of combinations.

Moreover, in some embodiments, machine readable storage media may have executable instructions that, when executed, cause UE 730 and/or hardware processing circuitry 740 to perform an operation comprising the methods of Figs. 12 and 13. Such machine readable storage media may include any of a variety of storage media, like magnetic storage media (e.g., magnetic tapes or magnetic disks), optical storage media (e.g., optical discs), electronic storage media (e.g., conventional hard disk drives, solid-state disk drives, or fiash-memory-based storage media), or any other tangible storage media or non-transitory storage media.

In some embodiments, an apparatus may comprise means for performing various actions and/or operations of the methods of Figs. 12 and 13.

Returning to Fig. 12, various methods may be in accordance with the various embodiments discussed herein. A method 1200 may comprise an identifying 1210, a processing 1215, and a determining 1220. In identifying 1210, a range of RBs may be identified (e.g., for a UE). In processing 1215, a transmission carrying one or more RB indicators for the range of RBs may be processed. In determining 1220, one or more overlapping sub-ranges of RBs of the range of RBs, and one or more non-overlapping subranges of RBs of the range of RBs, may be determined based on the one or more RB indicators.

In some embodiments, the one or more RB indicators may include an indicator having one of: a first value, or a second value. The first value may indicate that RBs from a first RB of the range of RBs up to a second RB of the range of RBs are overlapping RBs. The second value may indicate that no RBs of the range of RBs are overlapping RBs. For some embodiments, the indicator may have one of: the first value, the second value, or a third value. The third value may indicate that RBs from the second RB up to a third RB are overlapping RBs. In some embodiments, one or more of the first RB, the second RB, and the third RB is an index into a range of RBs.

For some embodiments, the one or more RB indicators may include an indicator having one of a plurality of values indexing into the range of RBs to indicate a subrange of overlapping RBs. In some embodiments, the indicator may have one of the plurality of values indexing into the range of RBs, or another value denoting that none of the range of RBs are overlapping RBs.

In some embodiments, the one or more RB indicators may comprise a first indicator indicating a first sub-range of RBs of the range of RBs and a second indicator indicating a second sub-range of RBs of the range of RBs. The RBs of the first sub-range of RBs may be non-overlapping RBs, and the RBs of the second sub-range of RBs may be overlapping RBs.

For some embodiments, the one or more RB indicators may include a bitmap with one or more indicator bits respectively corresponding to one or more RB segments of the range of RBs. In some embodiments, the indicator bits may have one of: a first value indicating that the RBs of the corresponding RB segment are overlapping, and a second value indicating that the RBs of the corresponding RB segment are non-overlapping.

In some embodiments, the transmission may be an RRC transmission. For some embodiments, the transmission may be a UL grant.

Returning to Fig. 13, various methods may be in accordance with the various embodiments discussed herein. A method 1300 may comprise an unmapping 1310 and a processing 1315. In unmapping 1310, an IFDMA based DMRS may be unmapped from one or more REs of a RB in a comb configuration. In processing 1315, the IFDMA based DMRS may be processed. The comb configuration may span one or more subcarrier frequencies of the RB and may begin at a comb offset subcarrier frequency. In some embodiments, method 1300 may comprise a generating 1320. In generating 1320, a transmission may be generated carrying one or more indicators selected from: a starting comb offset indicator, a hopping enable indicator, or a DMRS type indicator.

In some embodiments, the one or more REs may be within one of: a central OFDM symbol of a first slot of the RB, or a central OFDM symbol of a second slot of the RB. For some embodiments, one or more of the indicators may be carried in a DCI of the transmission. In some embodiments, the transmission may carry higher-layer signaling, and one or more of the indicators is carried in the higher-layer signaling. For some embodiments, the DMRS type indicator may have one of: a first value indicating no IFDMA, a second value indicating IFDMA with an RPF equal to 2, or a third value indicating IFDMA with an RPF equal to 4.

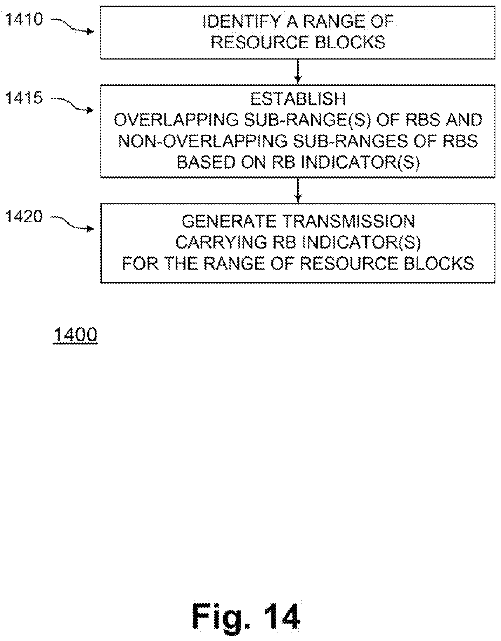

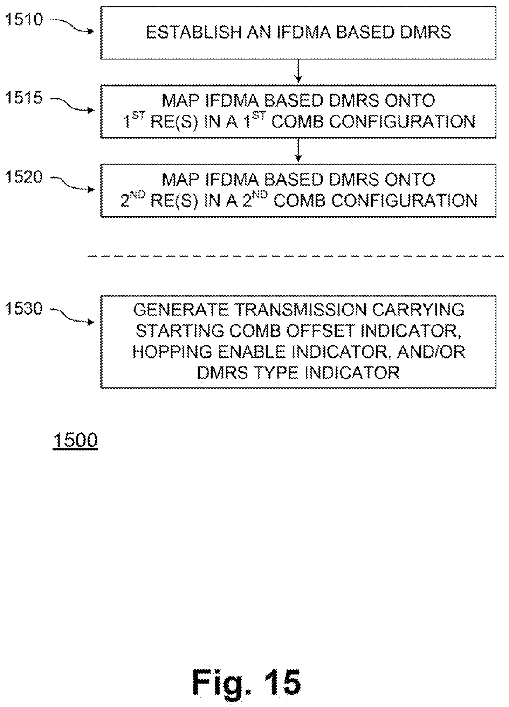

Fig. 14 illustrates methods for an eNB for control signaling of UL DMRS enhancement in FD-MIMO systems, in accordance with some embodiments of the disclosure. Fig. 15 illustrates methods for an eNB for UL IFDMA based DMRS in enhanced FD-MIMO systems, in accordance with some embodiments of the disclosure. With reference to Fig. 7, various methods that may relate to eNB 710 and hardware processing circuitry 720 are discussed herein. Although the actions in method 1400 of Fig. 14 and method 1500 of Fig. 15 are shown in a particular order, the order of the actions can be modified. Thus, the illustrated embodiments can be performed in a different order, and some actions may be performed in parallel. Some of the actions and/or operations listed in Figs. 14 and 15 are optional in accordance with certain embodiments. The numbering of the actions presented is for the sake of clarity and is not intended to prescribe an order of operations in which the various actions must occur. Additionally, operations from the various flows may be utilized in a variety of combinations.

Moreover, in some embodiments, machine readable storage media may have executable instructions that, when executed, cause eNB 710 and/or hardware processing circuitry 720 to perform an operation comprising the methods of Figs. 14 and 15. Such machine readable storage media may include any of a variety of storage media, like magnetic storage media (e.g., magnetic tapes or magnetic disks), optical storage media (e.g., optical discs), electronic storage media (e.g., conventional hard disk drives, solid-state disk drives, or flash-memory-based storage media), or any other tangible storage media or non-transitory storage media.

In some embodiments, an apparatus may comprise means for performing various actions and/or operations of the methods of Figs. 14 and 15.

Returning to Fig. 14, various methods may be in accordance with the various embodiments discussed herein. A method 1400 may comprise an identifying 1410, an establishing 1415, and a generating 1420. In identifying 1410, a range of RBs may be identified. In establishing 1415, one or more overlapping sub-ranges of RBs of the range of RBs, and one or more non-overlapping sub-ranges of RBs of the range of RBs, may be establish, based on one or more RB indicators. In generating 1420, a transmission may be generated carrying the one or more RB indicators for the range of RBs.

In some embodiments, the one or more RB indicators may include an indicator having one of: a first value, or a second value. The first value may indicate that RBs from a first RB of the range of RBs up to a second RB of the range of RBs are overlapping RBs. The second value may indicate that no RBs of the range of RBs are overlapping RBs. For some embodiments, the indicator may have one of: the first value, the second value, or a third value. The third value may indicate that RBs from the second RB up to a third RB are overlapping RBs. In some embodiments, one or more of the first RB, the second RB, and the third RB is an index into a range of RBs.

For some embodiments, the one or more RB indicators may include an indicator having one of a plurality of values indexing into the range of RBs to indicate a subrange of overlapping RBs. In some embodiments, the indicator may have one of the plurality of values indexing into the range of RBs, or another value denoting that none of the range of RBs are overlapping RBs.

In some embodiments, the one or more RB indicators may comprise a first indicator indicating a first sub-range of RBs of the range of RBs and a second indicator indicating a second sub-range of RBs of the range of RBs. The RBs of the first sub-range of RBs may be non-overlapping RBs, and the RBs of the second sub-range of RBs may be overlapping RBs.

For some embodiments, the one or more RB indicators may include a bitmap with one or more indicator bits respectively corresponding to one or more RB segments of the range of RBs. In some embodiments, the indicator bits may have one of: a first value indicating that the RBs of the corresponding RB segment are overlapping, and a second value indicating that the RBs of the corresponding RB segment are non-overlapping.

In some embodiments, the transmission may be an RRC transmission. For some embodiments, the transmission may be a UL grant.

Returning to Fig. 15, various methods may be in accordance with the various embodiments discussed herein. A method 1500 may comprise an establishing 1510, a mapping 1515, and a mapping 1520. In establishing 1510, an IFDMA based DMRS may be established. In mapping 1515, the IFDMA based DMRS may be mapped onto one or more first REs in a first comb configuration. In mapping 1520, the IFDMA based DMRS may be mapped onto one or more second REs in a second comb configuration. The first comb configuration may span one or more first subcarrier frequencies of a RB and may begin at a first comb offset subcarrier frequency. The second comb configuration may span one or more second subcarrier frequencies of the RB and may begin at a second comb offset subcarrier frequency different from the first comb offset subcarrier frequency. In some embodiments, method 1500 may comprise a generating 1530. In generating 1530, a transmission may be generated carrying one or more indicators selected from: a starting comb offset indicator, a hopping enable indicator, or a DMRS type indicator.

In some embodiments, the one or more REs may be within one of: a central OFDM symbol of a first slot of the RB, or a central OFDM symbol of a second slot of the RB. For some embodiments, one or more of the indicators may be carried in a DCI of the transmission. In some embodiments, the transmission may carry higher-layer signaling, and one or more of the indicators is carried in the higher-layer signaling. For some embodiments, the DMRS type indicator may have one of: a first value indicating no IFDMA, a second value indicating IFDMA with an RPF equal to 2, or a third value indicating IFDMA with an RPF equal to 4.

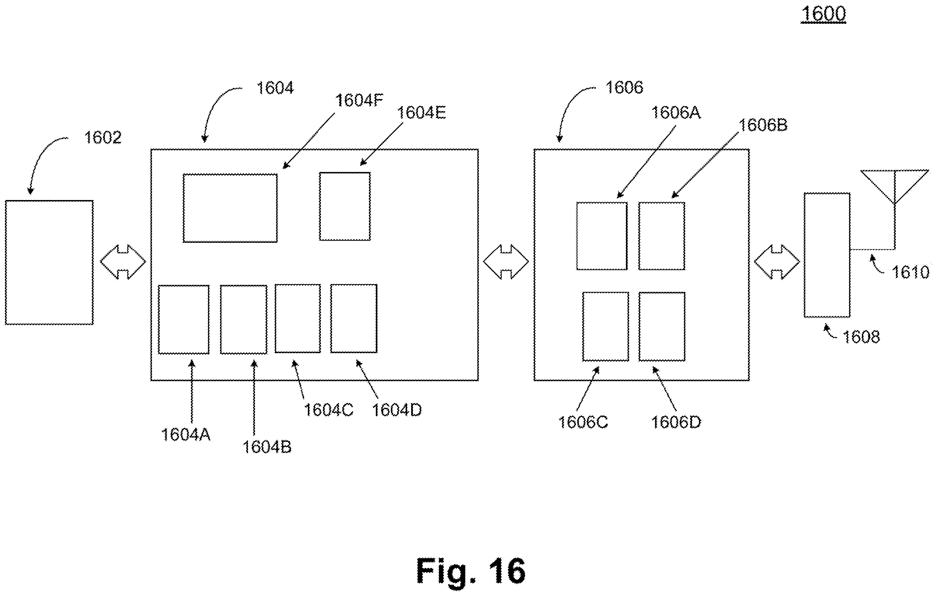

Fig. 16 illustrates example components of a UE device, in accordance with some embodiments of the disclosure. In some embodiments, a UE device 1600 may include application circuitry 1602, baseband circuitry 1604, Radio Frequency (RF) circuitry 1606, front-end module (FEM) circuitry 1608, a low-power wake-up receiver (LP-WUR), and one or more antennas 1610, coupled together at least as shown. In some embodiments, the UE device 1600 may include additional elements such as, for example, memory /storage, display, camera, sensor, and/or input/output (I/O) interface.

The application circuitry 1602 may include one or more application processors. For example, the application circuitry 1602 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory /storage and may be configured to execute instructions stored in the memory /storage to enable various applications and/or operating systems to run on the system.

The baseband circuitry 1604 may include circuitry such as, but not limited to, one or more single-core or multi-core processors. The baseband circuitry 1604 may include one or more baseband processors and/or control logic to process baseband signals received from a receive signal path of the RF circuitry 1606 and to generate baseband signals for a transmit signal path of the RF circuitry 1606. Baseband processing circuity 1604 may interface with the application circuitry 1602 for generation and processing of the baseband signals and for controlling operations of the RF circuitry 1606. For example, in some embodiments, the baseband circuitry 1604 may include a second generation (2G) baseband processor 1604A, third generation (3G) baseband processor 1604B, fourth generation (4G) baseband processor 1604C, and/or other baseband processor(s) 1604D for other existing generations, generations in development or to be developed in the future (e.g., fifth generation (5G), 6G, etc.). The baseband circuitry 1604 (e.g., one or more of baseband processors 1604A-D) may handle various radio control functions that enable communication with one or more radio networks via the RF circuitry 1606. The radio control functions may include, but are not limited to, signal modulation/demodulation, encoding/decoding, radio frequency shifting, etc. In some embodiments, modulation/demodulation circuitry of the baseband circuitry 1604 may include Fast-Fourier Transform (FFT), precoding, and/or constellation mapping/demapping functionality. In some embodiments, encoding/decoding circuitry of the baseband circuitry 1604 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1604 may include elements of a protocol stack such as, for example, elements of an EUTRAN protocol including, for example, physical (PHY), media access control (MAC), radio link control (RLC), packet data convergence protocol (PDCP), and/or RRC elements. A central processing unit (CPU) 1604E of the baseband circuitry 1604 may be configured to run elements of the protocol stack for signaling of the PHY, MAC, RLC, PDCP and/or RRC layers. In some embodiments, the baseband circuitry may include one or more audio digital signal processor(s) (DSP) 1604F. The audio DSP(s) 1604F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1604 and the application circuitry 1602 may be implemented together such as, for example, on a system on a chip (SOC).

In some embodiments, the baseband circuitry 1604 may provide for communication compatible with one or more radio technologies. For example, in some embodiments, the baseband circuitry 1604 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1604 is configured to support radio communications of more than one wireless protocol may be referred to as multi-mode baseband circuitry.

RF circuitry 1606 may enable communication with wireless networks using modulated electromagnetic radiation through a non-solid medium. In various embodiments, the RF circuitry 1606 may include switches, filters, amplifiers, etc. to facilitate the communication with the wireless network. RF circuitry 1606 may include a receive signal path which may include circuitry to down-convert RF signals received from the FEM circuitry 1608 and provide baseband signals to the baseband circuitry 1604. RF circuitry 1606 may also include a transmit signal path which may include circuitry to up-convert baseband signals provided by the baseband circuitry 1604 and provide RF output signals to the FEM circuitry 1608 for transmission.

In some embodiments, the RF circuitry 1606 may include a receive signal path and a transmit signal path. The receive signal path of the RF circuitry 1606 may include mixer circuitry 1606 A, amplifier circuitry 1606B and filter circuitry 1606C. The transmit signal path of the RF circuitry 1606 may include filter circuitry 1606C and mixer circuitry 1606 A. RF circuitry 1606 may also include synthesizer circuitry 1606D for synthesizing a frequency for use by the mixer circuitry 1606A of the receive signal path and the transmit signal path. In some embodiments, the mixer circuitry 1606 A of the receive signal path may be configured to down-convert RF signals received from the FEM circuitry 1608 based on the synthesized frequency provided by synthesizer circuitry 1606D. The amplifier circuitry 1606B may be configured to amplify the down-converted signals and the filter circuitry 1606C may be a low-pass filter (LPF) or bandpass filter (BPF) configured to remove unwanted signals from the down-converted signals to generate output baseband signals. Output baseband signals may be provided to the baseband circuitry 1604 for further processing. In some embodiments, the output baseband signals may be zero-frequency baseband signals, although this is not a requirement. In some embodiments, mixer circuitry 1606A of the receive signal path may comprise passive mixers, although the scope of the embodiments is not limited in this respect.

In some embodiments, the mixer circuitry 1606A of the transmit signal path may be configured to up-convert input baseband signals based on the synthesized frequency provided by the synthesizer circuitry 1606D to generate RF output signals for the FEM circuitry 1608. The baseband signals may be provided by the baseband circuitry 1604 and may be filtered by filter circuitry 1606C. The filter circuitry 1606C may include a low-pass filter (LPF), although the scope of the embodiments is not limited in this respect.

In some embodiments, the mixer circuitry 1606A of the receive signal path and the mixer circuitry 1606A of the transmit signal path may include two or more mixers and may be arranged for quadrature down-conversion and/or up-conversion respectively. In some embodiments, the mixer circuitry 1606A of the receive signal path and the mixer circuitry 1606A of the transmit signal path may include two or more mixers and may be arranged for image rejection (e.g., Hartley image rejection). In some embodiments, the mixer circuitry 1606 A of the receive signal path and the mixer circuitry 1606 A of the transmit signal path may be arranged for direct down-conversion and/or direct up-conversion, respectively. In some embodiments, the mixer circuitry 1606A of the receive signal path and the mixer circuitry 1606A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1606 may include analog-to-digital converter (ADC) and digital-to-analog converter (DAC) circuitry and the baseband circuitry 1604 may include a digital baseband interface to communicate with the RF circuitry 1606.

In some dual-mode embodiments, a separate radio IC circuitry may be provided for processing signals for each

**EP 3 443 700 B1**

spectrum, although the scope of the embodiments is not limited in this respect.

In some embodiments, the synthesizer circuitry 1606D may be a fractional-N synthesizer or a fractional N/N+1 synthesizer, although the scope of the embodiments is not limited in this respect as other types of frequency synthesizers may be suitable. For example, synthesizer circuitry 1606D may be a delta-sigma synthesizer, a frequency multiplier, or a synthesizer comprising a phase-locked loop with a frequency divider.

The synthesizer circuitry 1606D may be configured to synthesize an output frequency for use by the mixer circuitry 1606A of the RF circuitry 1606 based on a frequency input and a divider control input. In some embodiments, the synthesizer circuitry 1606D may be a fractional N/N+1 synthesizer.

In some embodiments, frequency input may be provided by a voltage controlled oscillator (VCO), although that is not a requirement. Divider control input may be provided by either the baseband circuitry 1604 or the applications processor 1602 depending on the desired output frequency. In some embodiments, a divider control input (e.g., N) may be determined from a look-up table based on a channel indicated by the applications processor 1602.

Synthesizer circuitry 1606D of the RF circuitry 1606 may include a divider, a delay-locked loop (DLL), a multiplexer and a phase accumulator. In some embodiments, the divider may be a dual modulus divider (DMD) and the phase accumulator may be a digital phase accumulator (DP A). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1606D may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1606 may include an IQ/polar converter.

FEM circuitry 1608 may include a receive signal path which may include circuitry configured to operate on RF signals received from one or more antennas 1610, amplify the received signals and provide the amplified versions of the received signals to the RF circuitry 1606 for further processing. FEM circuitry 1608 may also include a transmit signal path which may include circuitry configured to amplify signals for transmission provided by the RF circuitry 1606 for transmission by one or more of the one or more antennas 1610.

In some embodiments, the FEM circuitry 1608 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1606). The transmit signal path of the FEM circuitry 1608 may include a power amplifier (PA) to amplify input RF signals (e.g., provided by RF circuitry 1606), and one or more filters to generate RF signals for subsequent transmission (e.g., by one or more of the one or more antennas 1610.

In some embodiments, the UE 1600 comprises a plurality of power saving mechanisms. If the UE 1600 is in an RRC Connected state, where it is still connected to the eNB as it expects to receive traffic shortly, then it may enter a state known as Discontinuous Reception Mode (DRX) after a period of inactivity. During this state, the device may power down for brief intervals of time and thus save power.

If there is no data traffic activity for an extended period of time, then the UE 1600 may transition off to an RRC Idle state, where it disconnects from the network and does not perform operations such as channel quality feedback, handover, etc. The UE 1600 goes into a very low power state and it performs paging where again it periodically wakes up to listen to the network and then powers down again. Since the device might not receive data in this state, in order to receive data, it should transition back to RRC Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

In addition, in various embodiments, an eNB device may include components substantially similar to one or more of the example components of UE device 1600 described herein.

It is pointed out that elements of any of the Figures herein having the same reference numbers and/or names as elements of any other Figure herein may, in various embodiments, operate or function in a manner similar those elements of the other Figure (without being limited to operating or functioning in such a manner).

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional element.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. For example, other memory architectures e.g., Dynamic RAM (DRAM) may use the embodiments discussed. The embodiments of the disclosure are intended to embrace all such alternatives, modifications, and variations as to fall within the broad scope of the appended claims.

In addition, well known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

**Claims**

1. An apparatus of a User Equipment, UE (730, 1600), operable to communicate with an Evolved Node B, eNB (710), on a wireless network, comprising:

   one or more processors (1604A-D) configured to:

      identify a range of Resource Blocks, RBs, wherein the identified range comprises a set of RB segments configured through radio resource control, RRC, signaling by the eNB;
      process a transmission carrying one or more RB indicators for the range of RBs;
      determine, based on the one or more RB indicators, one or more overlapping sub-ranges of RBs (101, 201, 301) of the range of RBs, and one or more non-overlapping sub-ranges of RBs (102, 202, 302) of the range of RBs; and
      generate Demodulation Reference Signal, DMRS, sequences for overlapping RBs (101, 201, 301) and non-overlapping RBs (102, 202, 302),

   wherein the one or more RB indicators includes an indicator, added to an uplink, UL, grant, having one of: a first value, or a second value;
   wherein the first value indicates that an RB segment corresponding to the first value in the set of RB segments comprises overlapping RBs (101, 201, 301); and
   wherein the second value indicates that there are no overlapping RBs.

2. The apparatus of claim 1,

   wherein the indicator has one of: the first value, the second value, or a third value; and
   wherein the third value indicates that an RB segment corresponding to the second value in the set of RB segments comprises overlapping RBs (101, 201, 301).

3. Machine readable storage media having machine executable instructions that, when executed, cause one or more processors (1604A-D) of a User Equipment, UE (730, 1600), operable to communicate with an Evolved Node-B, eNB (710), on a wireless network to perform an operation comprising:

   identify a range of Resource Blocks, RBs, wherein the identified range comprises a set of RB segments configured through radio resource control, RRC, signaling by the eNB;

process a transmission carrying one or more RB indicators for the range of RBs;

determine, based on the one or more RB indicators, one or more overlapping sub-ranges of RBs (101, 201, 301) of the range of RBs, and one or more non-overlapping sub-ranges of RBs (102, 202, 302) of the range of RBs;

generate Demodulation Reference Signal, DMRS, sequences for overlapping RBs (101, 201, 301) and non-overlapping RBs (102, 202, 302), wherein the one or more RB indicators includes an indicator, added to an uplink, UL, grant, having one of: a first
value, or a second value;

wherein the first value indicates that an RB segment corresponding to the first value in the set of RB segments comprises overlapping RBs (101, 201, 301); and

wherein the second value indicates that there are no overlapping RBs.

4. The machine readable storage media of claim 3,

    wherein the indicator has one of: the first value, the second value, or a third value; and

    wherein the third value indicates that an RB segment corresponding to the second value in the set of RB segments comprises overlapping RBs (101, 201, 301).

5. An apparatus of an Evolved Node B, eNB (710), operable to communicate with a User Equipment, UE (730, 1600), on a wireless network, comprising:

    one or more processors (1604A-D) configured to:

        identify a range of Resource Blocks, RBs, wherein the identified range comprises a set of RB segments configured through radio resource control, RRC, signaling by the eNB;

        establish, based on one or more RB indicators, one or more overlapping sub-ranges of RBs (101, 201, 301) of the range of RBs, and one or more non-overlapping sub-ranges of RBs (102, 202, 302) of the range of RBs;

        generate a transmission carrying the one or more RB indicators for the range of RBs; and

        receiving, from the UE, Demodulation Reference Signal, DMRS, sequences for overlapping RBs (101, 201, 301) and non-overlapping RBs (102, 202, 302),

    wherein the one or more RB indicators includes an indicator, added to an uplink, UL, grant, having one of: a first value, or a second value;

    wherein the first value indicates that an RB segment in the set of RB segments corresponding to the first value comprises overlapping RBs (101, 201, 301); and

    wherein the second value indicates that there are no overlapping RBs.

6. The apparatus of claim 5,

    wherein the indicator has one of: the first value, the second value, or a third value; and

    wherein the third value indicates that an RB segment corresponding to the second value in the set of RB segments comprises overlapping RBs (101, 201, 301).

7. Machine readable storage media having machine executable instructions that, when executed, cause one or more processors (1604A-D) of an Evolved Node B, eNB (710), operable to communicate with a User Equipment, UE (730, 1600), on a wireless network to perform an operation comprising:

    identify a range of Resource Blocks, RBs, wherein the identified range comprises a set of RB segments configured through radio resource control, RRC, signaling by the eNB;

    establish, based on one or more RB indicators, one or more overlapping sub-ranges of RBs (101, 201, 301) of the range of RBs, and one or more non-overlapping sub-ranges of RBs (102, 202, 302) of the range of RBs;

    generate a transmission carrying the one or more RB indicators for the range of RBs; and

    receiving, from the UE, Demodulation Reference Signal, DMRS, sequences for overlapping RBs (101, 201, 301) and non-overlapping RBs (102, 202, 302),

    wherein the one or more RB indicators includes an indicator, added to an uplink, UL, grant, having one of: a first value, or a second value;

    wherein the first value indicates that an RB segment corresponding to the first value in the set of RB segments comprises overlapping RBs (101, 201, 301); and

wherein the second value indicates that there are no overlapping RBs.

8. The machine readable storage media of claim 7,

wherein the indicator has one of: the first value, the second value, or a third value; and
wherein the third value indicates that an RB segment corresponding to the second value in the set of RB segments comprises overlapping RBs (101, 201, 301).

**Patentansprüche**

1. Vorrichtung eines Benutzergerätes, UE (730, 1600), betreibbar, um mit einem Evolved Node B, eNB (710), in einem drahtlosen Netzwerk zu kommunizieren, umfassend:
einen oder mehrere Prozessoren (1604A-D), die konfiguriert sind zum:

Identifizieren eines Bereichs von Ressourcenblöcken, RBs, wobei der identifizierte Bereich einen Satz von RB-Segmenten umfasst, die durch Funkressourcen-Steuerung, RRC, -Signalisierung durch den eNB konfiguriert sind;
Verarbeiten einer Übertragung, die einen oder mehrere RB-Indikatoren für den Bereich von RBs trägt;
Bestimmen, basierend auf dem einen oder den mehreren RB-Indikatoren, eines oder mehrerer überlappender Teilbereiche von RBs (101, 201, 301) des Bereichs von RBs, und eines oder mehrerer nicht überlappender Teilbereiche von RBs (102, 202, 302) des Bereichs von RBs; und
Erzeugen von Demodulations-Referenz-Signal, DMRS, -Sequenzen für überlappende RBs (101, 201, 301) und nicht überlappende RBs (102, 202, 302),
wobei der eine oder die mehreren RB-Indikatoren einen Indikator beinhalten, der zu einer Uplink, UL, -Gewährung hinzugefügt wird, aufweisend eines von: einem ersten Wert, oder einem zweiten Wert;
wobei der erste Wert anzeigt, dass ein RB-Segment, das dem ersten Wert in dem Satz von RB-Segmenten entspricht, überlappende RBs (101, 201, 301) umfasst; und
wobei der zweite Wert anzeigt, dass es keine überlappenden RBs gibt.

2. Vorrichtung nach Anspruch 1,

wobei der Indikator eines aufweist von: dem ersten Wert, dem zweiten Wert oder einem dritten Wert; und
wobei der dritte Wert anzeigt, dass ein RB-Segment, das dem zweiten Wert in dem Satz von RB-Segmenten entspricht, überlappende RBs (101, 201, 301) umfasst.

3. Maschinenlesbare Speichermedien, die maschinenausführbare Anweisungen aufweisen, die, wenn sie ausgeführt werden, einen oder mehrere Prozessoren (1604A-D) eines Benutzergeräts UE (730, 1600), das zum Kommunizieren mit einem Evolved Node B, eNB (710), in einem drahtlosen Netzwerk betreibbar ist, veranlassen, einen Vorgang durchzuführen, der umfasst:

Identifizieren eines Bereichs von Ressourcenblöcken, RBs, wobei der identifizierte Bereich einen Satz von RB-Segmenten umfasst, die durch Funkressourcen-Steuerung, RRC, -Signalisierung durch den eNB konfiguriert sind;
Verarbeiten einer Übertragung, die einen oder mehrere RB-Indikatoren für den Bereich von RBs trägt;
Bestimmen, basierend auf dem einen oder den mehreren RB-Indikatoren, eines oder mehrerer überlappender Teilbereiche von RBs (101, 201, 301) des Bereichs von RBs, und eines oder mehrerer nicht überlappender Teilbereiche von RBs (102, 202, 302) des Bereichs von RBs;
Erzeugen von Demodulations-Referenz-Signal, DMRS, -Sequenzen für überlappende RBs (101, 201, 301) und nicht überlappende RBs (102, 202, 302),
wobei der eine oder die mehreren RB-Indikatoren einen Indikator beinhalten, der zu einer Uplink, UL, -Gewährung hinzugefügt wird, aufweisend eines von: einem ersten Wert, oder einem zweiten Wert;
wobei der erste Wert anzeigt, dass ein RB-Segment, das dem ersten Wert in dem Satz von RB-Segmenten entspricht, überlappende RBs (101, 201, 301) umfasst; und
wobei der zweite Wert anzeigt, dass es keine überlappende RBs gibt.

4. Maschinenlesbare Speichermedien nach Anspruch 3,

wobei der Indikator eines aufweist von: dem ersten Wert, dem zweiten Wert oder einem dritten Wert; und wobei der dritte Wert anzeigt, dass ein RB-Segment, das dem zweiten Wert in dem Satz von RB-Segmenten entspricht, überlappende RBs (101, 201, 301) umfasst.

5. Vorrichtung eines Evolved Node B, eNB (710), die betreibbar ist, um mit einem Benutzergerät, UE (730, 1600), in einem drahtlosen Netzwerk zu kommunizieren, umfassend:
einen oder mehrere Prozessoren (1604A-D), die konfiguriert sind zum:

Identifizieren eines Bereichs von Ressourcenblöcken RBs, wobei der identifizierte Bereich einen Satz von RB-Segmenten umfasst, die durch Funkressourcen-Steuerung, RRC, -Signalisierung durch den eNB konfiguriert sind;
Einrichten, basierend auf einem oder mehreren RB-Indikatoren, eines oder mehrerer überlappender Teilbereiche von RBs (101, 201, 301) des Bereichs von RBs und eines oder mehrerer nicht überlappender Teilbereiche von RBs (102, 202, 302) des Bereichs von RBs;
Erzeugen einer Übertragung, die den einen oder die mehreren RB-Indikatoren für den Bereich von RBs trägt; und
Empfangen, von dem UE, von Demodulations-Referenz-Signal, DMRS,--Sequenzen für überlappende RBs (101, 201, 301) und nicht überlappende RBs (102, 202, 302),
wobei der eine oder die mehreren RB-Indikatoren einen Indikator beinhalten, der zu einer Uplink, UL, -Gewährung hinzugefügt wird, aufweisend eines von: einem ersten Wert, oder einem zweiten Wert;
wobei der erste Wert anzeigt, dass ein RB-Segment in dem Satz von RB-Segmenten, der dem ersten Wert entspricht, überlappende RBs (101, 201, 301) umfasst; und
wobei der zweite Wert anzeigt, dass es keine überlappenden RBs gibt.

6. Vorrichtung nach Anspruch 5,

wobei der Indikator eines aufweist von: dem ersten Wert, dem zweiten Wert oder einem dritten Wert; und
wobei der dritte Wert anzeigt, dass ein RB-Segment, das dem zweiten Wert in dem Satz von RB-Segmenten entspricht, überlappende RBs (101, 201, 301) umfasst.

7. Maschinenlesbare Speichermedien, die maschinenausführbare Anweisungen aufweisen, die, wenn sie ausgeführt werden, einen oder mehrere Prozessoren (1604A-D) eines Evolved Node B, eNB (710), der zum Kommunizieren mit einem Benutzergerät, UE (730, 1600) in einem drahtlosen Netzwerk betreibbar ist, veranlassen, einen Vorgang durchzuführen, der umfasst:

Identifizieren eines Bereichs von Ressourcenblöcken, RBs, wobei der identifizierte Bereich einen Satz von RB-Segmenten umfasst, die durch Funkressourcen-Steuerung, RRC, -Signalisierung durch den eNB konfiguriert sind;
Einrichten, basierend auf einem oder mehreren RB-Indikatoren, eines oder mehrerer überlappender Teilbereiche von RBs (101, 201, 301) des Bereichs von RBs und eines oder mehrerer nicht überlappender Teilbereiche von RBs (102, 202, 302) des Bereichs von RBs;
Erzeugen einer Übertragung, die den einen oder die mehreren RB-Indikatoren für den Bereich der RBs trägt; und
Empfangen von Demodulations-Referenz-Signal, DMRS, -Sequenzen für überlappende RBs (101, 201, 301) und nicht überlappende RBs (102, 202, 302) von dem UE,
wobei der eine oder die mehreren RB-Indikatoren einen Indikator beinhalten, der zu einer Uplink, UL, -Gewährung hinzugefügt wird, aufweisend eines von: einem ersten Wert, oder einem zweiten Wert:

wobei der erste Wert anzeigt, dass ein RB-Segment, das dem ersten Wert in dem Satz von RB-Segmenten entspricht, überlappende RBs (101, 201, 301) umfasst; und
wobei der zweite Wert anzeigt, dass es keine überlappende RBs gibt.

8. Maschinenlesbare Speichermedien nach Anspruch 7,

wobei der Indikator eines aufweist von: dem ersten Wert, dem zweiten Wert oder einem dritten Wert; und
wobei der dritte Wert anzeigt, dass ein RB-Segment, das dem zweiten Wert in dem Satz von RB-Segmenten entspricht, überlappende RBs (101, 201, 301) umfasst.

**Revendications**

1. Un appareil d'un équipement utilisateur, UE (730, 1600), pouvant opérer pour communiquer avec un nœud B évolué, eNB (710), sur un réseau sans fil, comprenant :

   un ou plusieurs processeurs (1604A-D) configurés pour :

   l'identification d'une étendue de blocs de ressources, RB, l'étendue identifiée comprenant un ensemble de segments RB configurés par l'intermédiaire d'une signalisation de contrôle de ressources radio, RRC, par le eNB ;
   le traitement d'une transmission véhiculant un ou plusieurs indicateurs de RB pour l'étendue de RB ;
   la détermination, sur la base des un ou plusieurs indicateurs de RB, d'une ou plusieurs sous-étendues chevauchantes de RB (101, 201, 301) de l'étendue de RB, et d'une ou plusieurs sous-étendues non chevauchantes de RB (102, 202, 302) de l'étendue de RB ; et
   la génération de séquences de signaux de référence de démodulation, DMRS, pour les RB chevauchants (101, 201, 301) et les RB non chevauchants (102, 202, 302),

   dans lequel les un ou plusieurs indicateurs de RB comprennent un indicateur, ajouté à une permission de liaison montante, UL, ayant l'une d'entre : une première valeur, ou une seconde valeur ;
   dans lequel la première valeur indique qu'un segment de RB correspondant à la première valeur de l'ensemble de segments de RB comprend des RB chevauchants (101, 201, 301) ; et
   dans lequel la seconde valeur indique qu'il n'y a pas de RB chevauchants.

2. L'appareil de la revendication 1,

   dans lequel l'indicateur a l'une d'entre : la première valeur, la seconde valeur, ou une troisième valeur ; et
   dans lequel la troisième valeur indique qu'un segment de RB correspondant à la seconde valeur de l'ensemble de segments de RB comprend des RB chevauchants (101, 201, 301).

3. Support de stockage lisible par machine avec des instructions exécutables par machine qui, lorsqu'elles sont exécutées, font en sorte qu'un ou plusieurs processeurs (1604A-D) d'un équipement utilisateur, UE (730, 1600), pouvant opérer pour communiquer avec un nœud B évolué, eNB (710), sur un réseau sans fil effectuent une opération comprenant :

   l'identification d'une étendue de blocs de ressources, RB, l'étendue identifiée comprenant un ensemble de segments RB configurés par l'intermédiaire d'une signalisation de contrôle de ressources radio, RRC, par le eNB ;
   le traitement d'une transmission véhiculant un ou plusieurs indicateurs de RB pour l'étendue de RB ;
   la détermination, sur la base des un ou plusieurs indicateurs de RB, d'une ou plusieurs sous-étendues chevauchantes de RB (101, 201, 301) de l'étendue de RB, et une ou plusieurs sous-étendues non chevauchantes de RB (102, 202, 302) de l'étendue de RB ;
   la génération de séquences de signaux de référence de démodulation, DMRS, pour les RB chevauchants (101, 201, 301) et les RB non chevauchants (102, 202, 302),
   dans lequel les un ou plusieurs indicateurs de RB comprennent un indicateur, ajouté à une permission de liaison montante, UL, ayant l'une d'entre : une première valeur, ou une seconde valeur ;
   dans lequel la première valeur indique qu'un segment de RB correspondant à la première valeur de l'ensemble de segments de RB comprend des RB chevauchants (101, 201, 301) ; et
   dans lequel la seconde valeur indique qu'il n'y a pas de RB chevauchants.

4. Le support de stockage lisible par machine de la revendication 3,

   dans lequel l'indicateur a l'une d'entre : la première valeur, la seconde valeur, ou une troisième valeur ; et
   dans lequel la troisième valeur indique qu'un segment de RB correspondant à la seconde valeur de l'ensemble de segments de RB comprend des RB chevauchants (101, 201, 301).

5. Un appareil d'un nœud B évolué, eNB (710), pouvant fonctionner de manière à communiquer avec un équipement utilisateur, UE (730, 1600), sur un réseau sans fil, comprenant :

un ou plusieurs processeurs (1604A-D) configurés pour :

identifier une étendue de blocs de ressources, RB, l'étendue identifiée comprenant un ensemble de segments RB configurés par l'intermédiaire d'une signalisation de contrôle de ressources radio, RRC, par le eNB ;
établir, sur la base des un ou plusieurs indicateurs de RB, une ou plusieurs sous-étendues chevauchantes de RB (101, 201, 301) de l'étendue de RB, et une ou plusieurs sous-étendues non chevauchantes de RB (102, 202, 302) de l'étendue de RB ;
générer une transmission véhiculant les un ou plusieurs indicateurs de RB pour l'étendue de RB ; et
recevoir, en provenance de l'UE, des séquences de séquences de signaux de référence de démodulation, DMRS, pour les RB chevauchants (101, 201, 301) et les RB non chevauchants (102, 202, 302),

dans lequel les un ou plusieurs indicateurs de RB comprennent un indicateur, ajouté à une permission de liaison montante, UL, ayant l'une d'entre : une première valeur, ou une seconde valeur ;
dans lequel la première valeur indique qu'un segment de RB de l'ensemble de segments de RB correspondant à la première valeur comprend des RB chevauchants (101, 201, 301) ; et
dans lequel la seconde valeur indique qu'il n'y a pas de RB chevauchants.

6. L'appareil de la revendication 5,

dans lequel l'indicateur a l'une d'entre : la première valeur, la seconde valeur, ou une troisième valeur ; et
dans lequel la troisième valeur indique qu'un segment de RB correspondant à la seconde valeur de l'ensemble de segments de RB comprend des RB chevauchants (101, 201, 301).

7. Support de stockage lisible par machine avec des instructions exécutables par machine qui, lorsqu'elles sont exécutées, font en sorte qu'un ou plusieurs processeurs (1604A-D) d'un nœud B évolué, eNB (710) pouvant fonctionner de manière à communiquer avec un équipement utilisateur, UE (730, 1600), sur un réseau sans fil effectue une opération comprenant :

l'identification d'une étendue de blocs de ressources, RB, l'étendue identifiée comprenant un ensemble de segments RB configurés par l'intermédiaire d'une signalisation de contrôle de ressources radio, RRC, par le eNB ;
l'établissement, sur la base des un ou plusieurs indicateurs de RB, d'une ou plusieurs sous-étendues chevauchantes de RB (101, 201, 301) de l'étendue de RB, et d'une ou plusieurs sous-étendues non chevauchantes de RB (102, 202, 302) de l'étendue de RB ;
la génération d'une transmission véhiculant les un ou plusieurs indicateurs de RB pour l'étendue de RB ; et
la réception, en provenance de l'UE, de séquences de séquences de signaux de référence de démodulation, DMRS, pour les RB chevauchants (101, 201, 301) et les RB non chevauchants (102, 202, 302),
dans lequel les un ou plusieurs indicateurs de RB comprennent un indicateur, ajouté à une permission de liaison montante, UL, ayant l'une d'entre : une première valeur, ou une seconde valeur ;
dans lequel la première valeur indique qu'un segment de RB correspondant à la première valeur de l'ensemble de segments de RB comprend des RB chevauchants (101, 201, 301) ; et
dans lequel la seconde valeur indique qu'il n'y a pas de RB chevauchants.

8. Le support de stockage lisible par machine de la revendication 7,

dans lequel l'indicateur a l'une d'entre : la première valeur, la seconde valeur, ou une troisième valeur ; et
dans lequel la troisième valeur indique qu'un segment de RB correspondant à la seconde valeur de l'ensemble de segments de RB comprend des RB chevauchants (101, 201, 301).

Fig. 1

Fig. 2

Fig. 3

Fig. 4

Fig. 5

Fig. 6

**Fig. 7**

**Fig. 8**

Fig. 9

1020

1025

1030

1007

1005

1015

1010

1000

**Fig. 10**

**Fig. 11**

1210 — IDENTIFY
A RANGE OF RESOURCE BLOCKS

1215 — PROCESS A TRANSMISSION
CARRYING RB INDICATOR(S) FOR
THE RANGE OF RESOURCE BLOCKS

1220 — DETERMINE
OVERLAPPING SUB-RANGE(S) OF RBS AND
NON-OVERLAPPING SUB-RANGES OF RBS
BASED ON THE RB INDICATOR(S)

1200

# Fig. 12

1310 → UNMAP IFDMA BASED DMRS
FROM RESOURCE ELEMENT(S)
OF A RESOURCE BLOCK
IN A COMB CONFIGURATION

1315 → PROCESS IFDMA BASED DMRS

1320 → GENERATE TRANSMISSION CARRYING
STARTING COMB OFFSET INDICATOR,
HOPPING ENABLE INDICATOR, AND/OR
DMRS TYPE INDICATOR

<u>1300</u>

# Fig. 13

| 1410 | IDENTIFY A RANGE OF RESOURCE BLOCKS |
|---|---|
| 1415 | ESTABLISH OVERLAPPING SUB-RANGE(S) OF RBS AND NON-OVERLAPPING SUB-RANGES OF RBS BASED ON RB INDICATOR(S) |
| 1420 | GENERATE TRANSMISSION CARRYING RB INDICATOR(S) FOR THE RANGE OF RESOURCE BLOCKS |

1400

# Fig. 14

1510 → ESTABLISH AN IFDMA BASED DMRS

1515 → MAP IFDMA BASED DMRS ONTO 1$^{ST}$ RE(S) IN A 1$^{ST}$ COMB CONFIGURATION

1520 → MAP IFDMA BASED DMRS ONTO 2$^{ND}$ RE(S) IN A 2$^{ND}$ COMB CONFIGURATION

- - - - - - - - - - - - - - - - - - - - - - - - - - - - -

1530 → GENERATE TRANSMISSION CARRYING STARTING COMB OFFSET INDICATOR, HOPPING ENABLE INDICATOR, AND/OR DMRS TYPE INDICATOR

<u>1500</u>

# Fig. 15

**Fig. 16**

EP 3 443 700 B1

**EP 3 443 700 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140192756 A
- US 20140241303 A
- US 20140126480 A